# EUROPÄISCHE PATENTSCHRIFT

(11) **EP 2 218 928 B1**
(45) Veröffentlichungstag und Bekanntmachung des Hinweises auf die Patenterteilung: **29.06.2011**
(21) Anmeldenummer: 10000473.8
(22) Anmeldetag: 19.01.2010
(51) Int. Cl.: F16C 29/06, B23Q 5/40

(54) **Linearbewegungsvorrichtung mit kompakter Motoranordnung**
Linear movement device with compact motor assembly
Dispositif de déplacement linéaire doté d'un agencement de moteur compact

(30) Priorität: 16.02.2009 DE 102009009009
(43) Veröffentlichungstag der Anmeldung: 18.08.2010
(73) Patentinhaber: ROBERT BOSCH GMBH, 70469 Stuttgart (DE)
(72) Erfinder: Keller, Bernhard, 97535 Kaisten (DE); Pfister, Steffen, 97464 Niederwerrn (DE)
(74) Vertreter: Maiß, Harald

(56) Entgegenhaltungen:
- US-A1- 2007 107 228
- US-A1- 2008 193 065

## Beschreibung

Die Erfindung betrifft eine Linearbewegungsvorrichtung gemäß dem Oberbegriff von Anspruch 1.

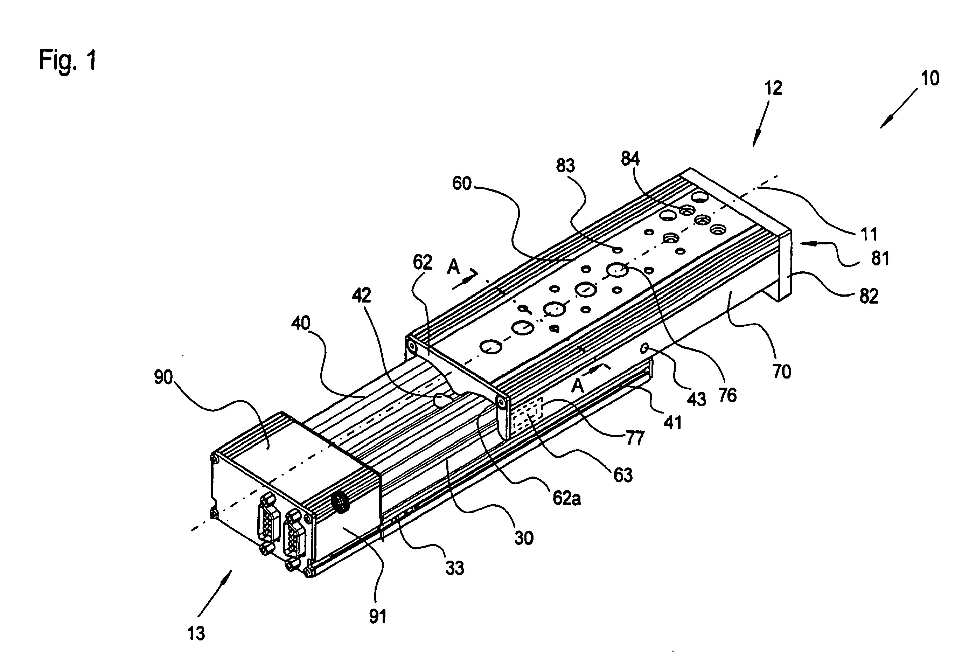

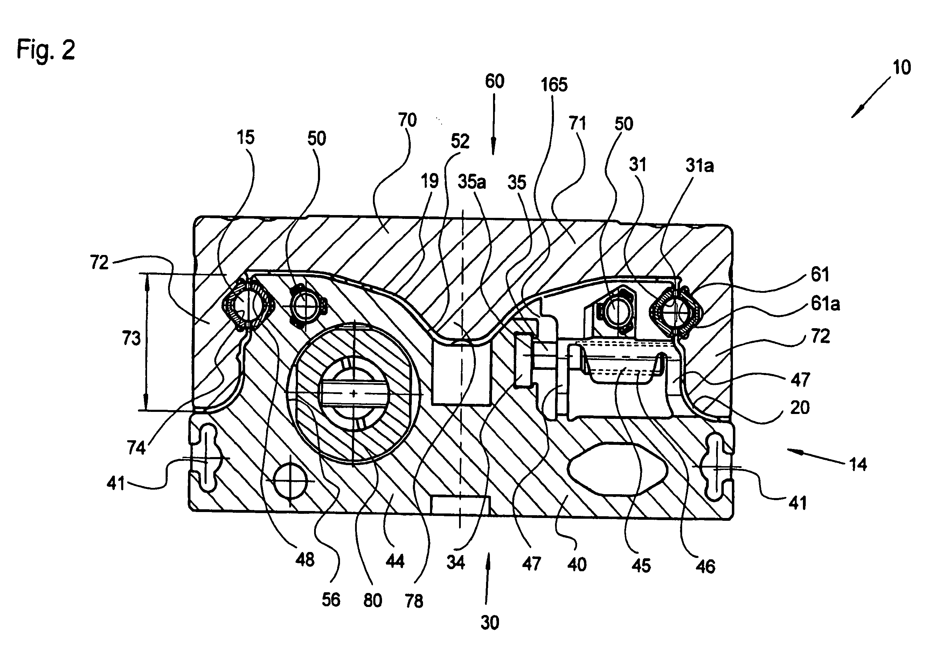

Aus der DE 10 2007 006 249 A1 ist eine Linearbewegungsvorrichtung bekannt. Gemäß der Fig. 2 der DE 10 2007 006 249 A1 umfasst die Linearbewegungsvorrichtung eine erste Baugruppe 12 und eine gegenüber der ersten Baugruppe linearbewegliche zweite Baugruppe 16 in Form eines U-förmigen Tischteils. Die erste Baugruppe umfasst einen einstückigen ersten Grundkörper, an dem eine sich in eine Längsrichtung erstreckende Führungsschiene 14 befestigt ist. An der Führungsschiene sind insgesamt vier erste Wälzflächen vorgesehen, die jeweils einer zweiten Wälzfläche an der zweiten Baugruppe gegenüberliegen, welche wiederum an gesonderten zweiten Wälzflächenteilen ausgebildet ist. Zwischen den ersten und zweiten Wälzflächen ist je eine Reihe von kugelförmigen Wälzkörpern aufgenommen, die in der zweiten Baugruppe endlos umlaufen können. Die erste Baugruppe umfasst weiter eine drehbare Gewindespindel 24, die mit einer Gewindemutter in Schraubeingriff steht und deren Drehachse parallel zur Längsrichtung angeordnet ist. Gemäß Fig. 1 ist die Gewindespindel mit einem Elektromotor 22 verbunden, dessen Drehachse kolinear zur Drehachse der Gewindespindel verläuft. Diese Anordnung des Elektromotors verursacht eine besonders große Baulänge der Linearbewegungsvorrichtung.

Hinzuweisen ist noch auf das Schutzrohr 28, mit dem die Kraftübertragung zwischen der Gewindemutter und der zweiten Baugruppe erfolgt. Das Schubrohr hat zusammen mit dem ersten Grundkörper überdies die Aufgabe, die Gewindespindel im Wesentlichen dicht zu umschließen, so dass diese vor Umgebungseinflüssen geschützt ist.

Die Aufgabe der Erfindung besteht darin, eine kompaktere Linearbewegungsvorrichtung zu schaffen, die überdies außergewöhnlich kostengünstig herstellbar ist. Hierbei soll der Schutz der Gewindespindel vor Umgebungseinflüssen weiterhin gewährleistet sein.

Gemäß dem selbstständigen Anspruch wird diese Aufgabe dadurch gelöst, dass die Gewindespindel und der Elektromotor im Bereich des ersten Grundkörpers nebeneinander angeordnet sind, wobei sich der Elektromotor über einen ersten Längsabschnitt des ersten Grundkörpers erstreckt, während sich die erste Wälzfläche über einen zweiten vom ersten verschiedenen Längsabschnitt des ersten Grundkörpers erstreckt, wobei sich die Gewindespindel über den ersten und wenigstens abschnittsweise über den zweiten Längsabschnitt des ersten Grundkörpers erstreckt und wobei die Wälzkörper in der ersten Baugruppe endlos umlaufen können. Demgemäß soll also der Elektromotor nicht mehr außen am ersten Grundkörper angebracht werden, sondern innerhalb des Bauraums des ersten Grundkörpers neben der Gewindespindel. Dies ist bei der DE 10 2007 006 249 A1 nicht möglich, weil dieser Platz von der Führungsschiene belegt wird, die sich im Wesentlichen über die gesamte Länge des ersten Grundkörpers erstreckt. Deshalb wird erfindungsgemäß vorgeschlagen, die Wälzkörper in der ersten Baugruppe mit dem Elektromotor und der Gewindespindel umlaufen zu lassen und nicht wie bekannt in der zweiten Baugruppe. Die Wälzfläche - hier die erste Wälzfläche -, die dem Wälzkörperumlauf zugeordnet ist, ist wesentlich kürzer als die gegenüberliegende Wälzfläche - hier die zweite Wälzfläche-. Durch die Verlagerung des Wälzkörperumlaufs an die erste Baugruppe wird also der notwendige Bauraum in der ersten Baugruppe zur Aufnahme des Elektromotors geschaffen.

In den abhängigen Ansprüchen sind vorteilhafte Weiterbildungen und Verbesserungen der Erfindung angegeben.

Die zweite Baugruppe kann im Wesentlichen U-förmig mit einer Basis und zwei U-Schenkeln ausgeführt sein, wobei an den Innenseiten der U-Schenkel wenigstens je eine zweite Wälzfläche vorgesehen ist, wobei die U-Schenkel den ersten Grundkörper umgreifen, wobei sich die Gewindespindel und/oder der Elektromotor wenigstens abschnittsweise im Höhenbereich der U-Schenkel erstrecken und zwischen diesen angeordnet sind. Demgemäß kommt keine kompakte Führungsschiene sondern eine U-förmige Führungsschiene zum Einsatz, die aber nunmehr als bewegliche zweite Baugruppe eingesetzt wird. Hiermit wird zwischen den entsprechenden zweiten Wälzflächen Bauraum zur Aufnahme der Wälzkörperumläufe, der Gewindespindel und des Elektromotors geschaffen. Wie man aus der DE 10 2007 006 249 A1 ersieht ist es ohnehin erforderlich, das bewegliche Tischteil im Wesentlichen U-förmig auszuführen, damit es eine genügend große Steifigkeit aufweist. Durch die vorgeschlagene Anordnung der zweiten Wälzflächen wird dementsprechend kein zusätzlicher Bauraum beansprucht.

Der Elektromotor und die Gewindespindel können von dem ersten Grundkörper im Wesentlichen vollständig umschlossen sein. Die erfindungsgemäße Anordnung des Elektromotors macht es problemlos möglich, auch diesen durch den ersten Grundkörper zu umschließen, so dass er vor Umgebungseinflüssen geschützt ist. Es kann also ein sehr viel kostengünstiger Elektromotor zum Einsatz kommen, der selbst nicht oder nur eingeschränkt vor Umgebungseinflüssen geschützt ist. Der erste Grundkörper ist vorzugsweise aus Aluminium im Strangpressverfahren hergestellt, so dass die notwendigen Aufnahmeräume bereits beim Strangpressen kostengünstig hergestellt werden können. Bei dieser Ausführungsform kommt bevorzugt das bekannte Schubrohr zum Einsatz, über das die Gewindemutter mit der zweiten Baugruppe in Antriebsverbindung steht, wobei das Schutzrohr die Gewindespindel umgibt. Somit ist die Gewindespindel und die Gewindemutter bis auf kleinste Spalten zwischen der ersten und zweiten Baugruppe nahezu vollständig gegen Umgebungseinflüsse abgedichtet.

Die Gewindemutter kann in der Art eines Kolbens in einer angepassten Mutterausnehmung des ersten Grundkörpers aufgenommen sein, so dass ihre Relativbewegung zum ersten Grundkörper einen Luftstrom erzeugen kann, wobei der Elektromotor in einer Motorausnehmung des ersten Grundkörpers aufgenommen ist, die in Luftaustauschverbindung mit der Mutterausnehmung steht, so dass der genannte Luftstrom den Elektromotor kühlen kann. Die hin- und hergehende Bewegung der zweiten Baugruppe wird also genutzt, um Luft aus der Umgebung anzusaugen und wieder an diese abzugeben. Die genannte Luft wird hierbei am Elektromotor vorbei geführt, so dass dieser gekühlt wird. Durch die Kühlung kann ein kleinerer Elektromotor eingesetzt werden, der sich ohne die Kühlung stärker erwärmen würde als eine größere Bauform mit gleicher Leistung. Da die Gewindemutter üblicherweise kreiszylindrisch ausgeführt ist, kann die angepasste Mutterausnehmung in Form einer kreiszylindrischen Bohrung ebenfalls problemlos hergestellt werden. Hierbei muss keine vollständige Dichtheit zwischen der Gewindemutter und der Mutterausnehmung gegeben sein. Es reicht aus, wenn der Strömungswiderstand der Luft im genannten Bereich wesentlich größer als entlang des Strömungsweges am Elektromotor vorbei ist.

Zwischen der Mutterausnehmung und der Gewindemutter oder einem mit der Gewindemutter fest verbundenen Bauteil kann eine gesonderte Spaltdichtung vorgesehen sein, die den Spalt zwischen der Mutterausnehmung und der Gewindemutter bzw. dem damit fest verbundenen Bauteil im Wesentlichen luftdicht verschließt. Durch die Spaltdichtung wird verhindert, dass Luft durch einen Spalt zwischen Gewindemutter und Mutterausnehmung entweichen kann, so dass sich der bestmögliche Pumpeffekt einstellt. Demgemäß ist die Kühlwirkung bei dieser Ausführungsform besonders gut. Bei dem gesonderten Bauteil, welches mit der Mutter fest verbunden ist, ist in erster Linie an das bereits erwähnte Schubrohr gedacht.

Die Gewindemutter kann über ein Schubrohr, das die Gewindespindel umgibt, mit der verbleibenden zweiten Baugruppe in Antriebsverbindung stehen, wobei die Gewindemutter eine Wälzkörpergewindemutter ist, die wenigstens an dem vom Schubrohr abgewandten Ende mit einer Enddichtung versehen ist. Üblicherweise werden Kugelgewindemuttern an beiden Längsenden mit einer Enddichtung versehen. Diese Enddichtung wird bei der vorliegenden Ausführungsform auch dazu verwendet, die Mutterausnehmung mit der Gewindemutter luftdicht abzuschließen. Hierfür reicht es aus, wenn an der genannten Seite der Gewindemutter eine Enddichtung vorgesehen ist.

An der dem Schubrohr zugewandten Seite der Gewindemutter ist vorzugsweise keine Enddichtung vorgesehen, wobei das Schubrohr mit Schmierfett gefüllt ist. Der Hohlraum innerhalb des Schubrohres kann somit als Schmierfettdepot genutzt werden. In diesem verhältnismäßig großen Hohlraum kann so viel Schmierfett aufgenommen werden, dass eine lebenslange Schmierung des Gewindetriebes gewährleistet ist. Um sicherzustellen, dass das Schmierfett auch in die Gewindemutter gelangt, wird auf der genannten Seite auf eine Enddichtung verzichtet. Dies ist ohne Nachteil möglich, da die Gewindespindel durch das Schutzrohr im Wesentlichen vollständig abgedeckt wird, so dass nahezu keine Verbindung zur Umgebung besteht. Es ist jedoch darauf hinzuweisen, dass eine kleine Druckausgleichsöffnung vorhanden sein muss, damit Luftdruckschwankungen im Schubrohr durch die ein- und ausfahrende Gewindespindel vermieden werden.

Die Mutterausnehmung und die Motorausnehmung können gesondert voneinander an einem hinteren Längsende des ersten Grundkörpers vorgesehen sein, wobei zwischen der Mutterausnehmung und der Motorausnehmung eine Luftübertrittsausnehmung vorgesehen ist, so dass die Mutterausnehmung mit der Motorausnehmung in Luftaustauschverbindung steht. Die Mutter- und die Motorausnehmungen können somit jeweils spezifisch an den Elektromotor bzw. die Gewindespindel angepasst werden, wobei trotzdem der erwünschte Luftaustausch möglich ist. Durch Anbringung der genannten Ausnehmungen an einem einzigen Längsende des ersten Grundkörpers sind erstgenannte gut zugänglich. Insbesondere können sie problemlos mit einer gemeinsamen Abdeckung verschlossen werden.

Der Elektromotor kann mit der Gewindespindel und einer zugeordneten Drehlagerung zu einer Antriebsbaugruppe zusammengefasst sein, die als Ganzes an dem ersten Grundkörper montiert werden kann. Die Montage der genannten Komponenten wird dadurch deutlich vereinfacht. Hinzuweisen ist insbesondere auf die notwendige Ausrichtung zwischen dem Elektromotor und der Gewindespindel zur Bereitstellung der Drehantriebsverbindung. Diese geschieht vorzugsweise mit einem Zahnriemen, der beispielsweise auf die notwendige Spannung gebracht werden muss. Dies kann an der separaten Antriebsbaugruppe wesentlich einfacher vorgenommen werden als in der fertig montierten Linearbewegungsvorrichtung. Anzumerken ist, dass die Antriebsbaugruppe definitionsgemäß Bestandteil der erfindungsgemäßen ersten Baugruppe ist.

Die Antriebsbaugruppe kann die Mutter-, die Motor- und die Luftübertrittsausnehmung im Wesentlichen luftdicht abdecken. Damit ist ein im Wesentlichen dichterer Einschluss des Gewindetriebs und des Elektromotors gewährleistet, ohne dass gesonderte Verschlussbauteile für die genannten Ausnehmungen erforderlich sind. Diese Linearbewegungsvorrichtung ist dementsprechend kostengünstig. Die luftdichte Abdeckung ist erforderlich, damit der oben beschriebene Kühleffekt des Elektromotors nicht verloren geht.

Die Gewindespindel kann ein gesondertes Lagerteil umfassen, das über ein Radialwälzlager in der ersten Baugruppe, vorzugsweise in der Antriebsbaugruppe, drehbar gelagert ist, wobei ein vom Lagerteil gesondertes Gewindeteil vorgesehen ist, das über seine gesamte Länge mit wenigstens einem schraubenförmigen Gewindegang versehen ist, wobei das Gewindeteil im Lagerteil festgeklemmt ist. Bei dem Gewindeteil handelt es sich vorzugsweise um eine Gewindespindel, die im Rollverfahren hergestellt ist. Bei diesem Verfahren werden die schraubenförmigen Gewindenuten in mehrere Meter lange Rundstangen mittels drehbarer Formrollen eingewalzt, wobei die Gewindespindel aus Wälzlagerstahl anschließend gehärtet wird. Diese Rohteile werden üblicherweise Span abhebend bearbeitet, um beispielsweise Lagersitze oder Antriebszapfen daran anzubringen. Aufgrund der harten Spindeloberfläche ist diese Bearbeitung aber sehr teuer. Diese Bearbeitung soll durch das gesonderte Lagerteil vermieden werden. Bei der vorliegenden Ausführungsform muss das Gewindeteil nur noch mit einem geraden Schnitt von dem Rohmaterial abgesägt werden, ohne dass eine weitere Bearbeitung erforderlich ist. Das Lagerteil kann aus einem leicht zu bearbeitenden Material kostengünstig in großen Stückzahlen hergestellt werden. Hierbei ist anzumerken, dass das Lagerteil unabhängig von dem Verfahrweg der Linearbewegungsvorrichtung immer gleich ausgeführt ist. Diese Ausführungsform ist besonders vorteilhaft in Verbindung mit der bereits genannten Antriebsbaugruppe, da diese ohne das Gewindeteil ebenfalls kostengünstig in großen Stückzahlen hergestellt werden kann.

Die Erfindung wird im Folgenden anhand der beigefügten Zeichnungen näher erläutert. Es stellt dar:
- Fig. 1: eine perspektivische Ansicht einer erfindungsgemäßen Linearbewegungsvorrichtung;
- Fig. 2: einen Querschnitt der Linearbewegungsvorrichtung gemäß Fig. 1, wobei die Schnittebene in Fig. 1 mit A-A gekennzeichnet ist;
- Fig. 3: eine perspektivische Ansicht der ersten Baugruppe der Linearbewegungsvorrichtung gemäß Fig. 1;
- Fig. 3a: eine perspektivische Teilansicht einer zweiten Ausführungsform der ersten Baugruppe gemäß Fig. 3;
- Fig. 4: eine perspektivische Ansicht der Antriebsbaugruppe der Linearbewegungsvorrichtung gemäß Fig. 1;
- Fig. 5: eine perspektivische Ansicht der zweiten Baugruppe der Linearbewegungsvorrichtung gemäß Fig. 1;
- Fig. 6: eine perspektivische Ansicht eines Wälzkörperumlaufs ohne die umgebende erste Baugruppe;
- Fig. 7: eine Explosionsdarstellung der Umlenkbaugruppe des Wälzkörperumlaufs gemäß Fig. 6;
- Fig. 8: eine perspektivische Ansicht des Überführungsteils gemäß Fig. 7;
- Fig. 9: einen Querschnitt eines Rücklaufdurchgangs mit eingesetztem Überführungsteil;
- Fig. 10: eine perspektivische Ansicht einer zweiten Ausführungsform der Umlenkbaugruppe;
- Fig. 11: eine Explosionsdarstellung einer dritten Ausführungsform der Umlenkbaugruppe;
- Fig. 12: eine perspektivische Ansicht einer zweiten Ausführungsform des Überführungsteils;
- Fig. 13: einen Längsschnitt der Linearbewegungsvorrichtung im Bereich des Überführungsteils gemäß Fig. 12; und
- Fig. 14: einen Querschnitt der Linearbewegungsvorrichtung im Bereich des ersten und des zweiten Wälzflächenteils.

Fig. 1 zeigt eine erfindungsgemäße Linearbewegungsvorrichtung 10 in Form eines Linearmoduls. Die Linearbewegungsvorrichtung umfasst eine erste Baugruppe 30 in Form eines Gehäuses, das sich in einer Längsrichtung 11 erstreckt. Weiter ist eine zweite Baugruppe 60 in Form eines Tischteils vorgesehen, welche längsbeweglich gegenüber der ersten Baugruppe 30 ist. Die zweite Baugruppe 60 umfasst einen zweiten Grundkörper 70, der aus Aluminium besteht, wobei an dessen vorderem Ende 12 eine Befestigungsplatte 82 vorgesehen ist, die sich in jeder Stellung der zweiten Baugruppe vor dem vorderen Ende der ersten Baugruppe 30 befindet. Bei der Befestigungsplatte 82 handelt es sich um eine ebene Platte aus Aluminium, die ebenso wie der zweite Grundkörper 60 mit verschiedenen Befestigungsmitteln 81 in Form von Gewinde- 83 und Durchgangsbohrungen 84 versehen ist, so dass diese an einer (nicht dargestellten) übergeordneten Baugruppe befestigt werden können.

Die erste Baugruppe 30 umfasst einen ersten Grundkörper 40, der ebenfalls aus Aluminium besteht. In dem ersten Grundkörper 40 sind Durchgangsbohrungen 42 als Befestigungsmittel vorgesehen, so dass die erste Baugruppe 30 an einer (nicht dargestellten) untergeordneten Baugruppe befestigt werden kann. Da die Befestigungsmittel 42 der ersten Baugruppe 30 zum Teil durch die zweite Baugruppe 60 verdeckt sind, sind in letztgenannter diverse durchgehende Montagebohrungen 76 vorgesehen, durch die hindurch Schraubbolzen in die Durchgangsbohrungen 42 der ersten Baugruppe 30 eingeführt werden können.

Am hinteren Ende 13 des zweiten Grundkörpers 70 ist eine Abstreifplatte 62 aus Stahlblech mittels Befestigungsschrauben 62a montiert. Die Abstreifplatte 62 steht dem ersten Grundkörper 40 mit geringem Abstand gegenüber, so dass im Wesentlichen keine Fremdkörper zwischen die erste 30 und die zweite Baugruppe 60 gelangen können. Mit der Abstreifplatte 61 wird überdies eine stirnseitige (grobschematisch dargestellte) Magnetausnehmung 77 im zweiten Grundkörper 70 verschlossen, in der ein (grobschematisch dargestellter) Permanentmagnet 63 aufgenommen ist. Das Magnetfeld dieses Permanentmagneten 63 kann durch einen oder mehrere Sensoren 33 erfasst werden, die in einer sich in Längsrichtung 11 erstreckenden, hinterschnittenen Sensomut 41 in jeder beliebigen Längsposition festlegbar sind. Hierdurch kann eine oder mehrere Stellungen der zweiten Baugruppe 60 bezüglich der ersten Baugruppe 30 durch eine (nicht dargestellte) übergeordnete Steuerungsvorrichtung erkannt werden.

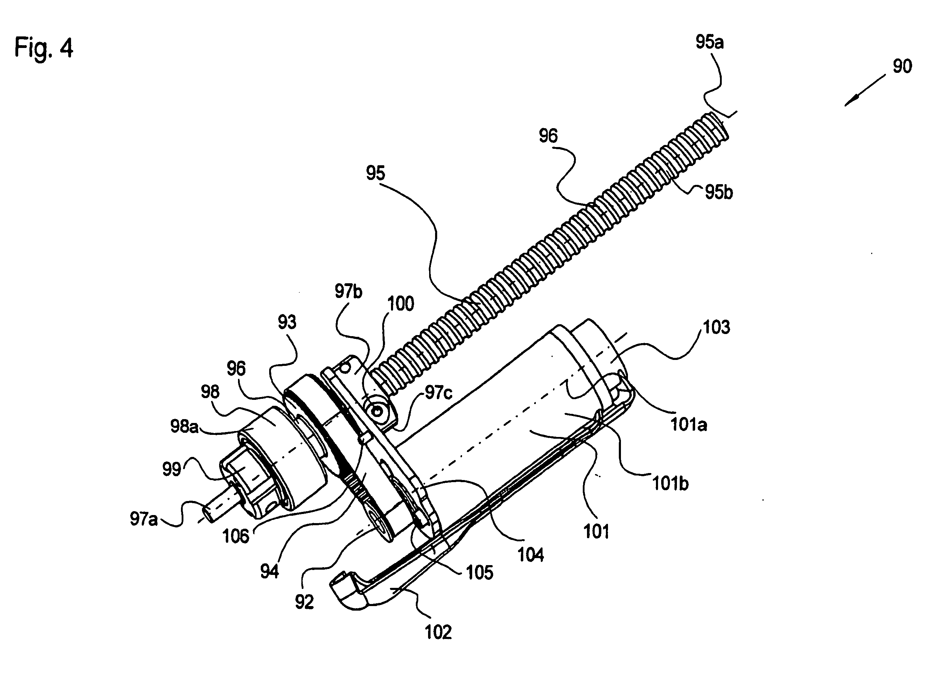

Am hinteren Ende 13 des ersten Grundkörpers 40 ist eine Antriebsbaugruppe 90 vorgesehen, mit der die zweite Baugruppe 60 gegenüber der ersten Baugruppe 30 bewegt werden kann. In Fig. 1 ist jedoch nur das Getriebegehäuse 91 der Antriebsbaugruppe 90 zur erkennen, wobei letztgenannte mit Bezug auf Fig. 4 noch näher erläutert wird.

Fig. 2 zeigt einen Querschnitt der Linearbewegungsvorrichtung 10. Zu erkennen ist der insgesamt U-förmige Aufbau des zweiten Grundkörpers 70 mit einer Basis 71 und zwei senkrecht von dieser abstehenden U-Schenkeln 72. An den gegenüberliegenden Innenseiten der U-Schenkel ist je ein zweites Wälzflächenteil 61 vorgesehen. Bei dem zweiten Wälzflächenteil 61 handelt es sich um einen sich in Längsrichtung erstreckenden Profilkörper, der eine konstante im Wesentlichen V-förmige Querschnittsform aufweist. An der Innenseite der V-Form ist das aus gehärtetem Wälzlagerstahl bestehende zweite Wälzflächenteil 61 mit einer zweiten Wälzfläche 61 a versehen, die mit einem spitzbogenförmigen Querschnittsprofil ausgeführt ist, so dass die kugelförmigen Wälzkörper 15 die zweite Wälzfläche 61a in bekannter Weise an zwei Punkten berühren. Dem zweiten Wälzflächenteil 61 steht ein erstes Wälzflächenteil 31 gegenüber, das bis auf die Länge identisch mit dem zweiten Wälzflächenteil 61 ausgeführt ist. Die Wälzkörper 15 können dementsprechend zwischen den ersten und den zweiten Wälzflächen 31 a; 61a abwälzen, so dass die zweite Baugruppe 60 an der ersten Baugruppe 30 längsbeweglich abgestützt ist. Der erste 40 und der zweite Grundkörper 70 sind jeweils aus einem Rohteil gefertigt, das aus Aluminium im Strangpressverfahren hergestellt ist, wobei das beim Strangpressen hergestellte Querschnittsprofil in weiten Teilen dem in Fig. 2 zu erkennenden Querschnittsprofil entspricht. Auf die Geometrien, die nach dem Strangpressen noch Span abhebend bearbeitet werden, wird im Folgenden entsprechend hingewiesen. Hierbei sind an erster Stelle die Aufnahmausnehmungen 48; 74 zu nennen, in denen die ersten 31 und die zweiten Wälzflächenteile 61 formschlüssig aufgenommen sind. Erstgenannte 48; 74 müssen genau an die zugeordneten Wälzflächenteile 31; 61 angepasst sein und eine hohe Geradheit aufweisen, damit die Wälzführung steif und genau arbeitet. Sie wurden deshalb mittels einer Fräsbearbeitung am entsprechenden Rohteil angebracht.

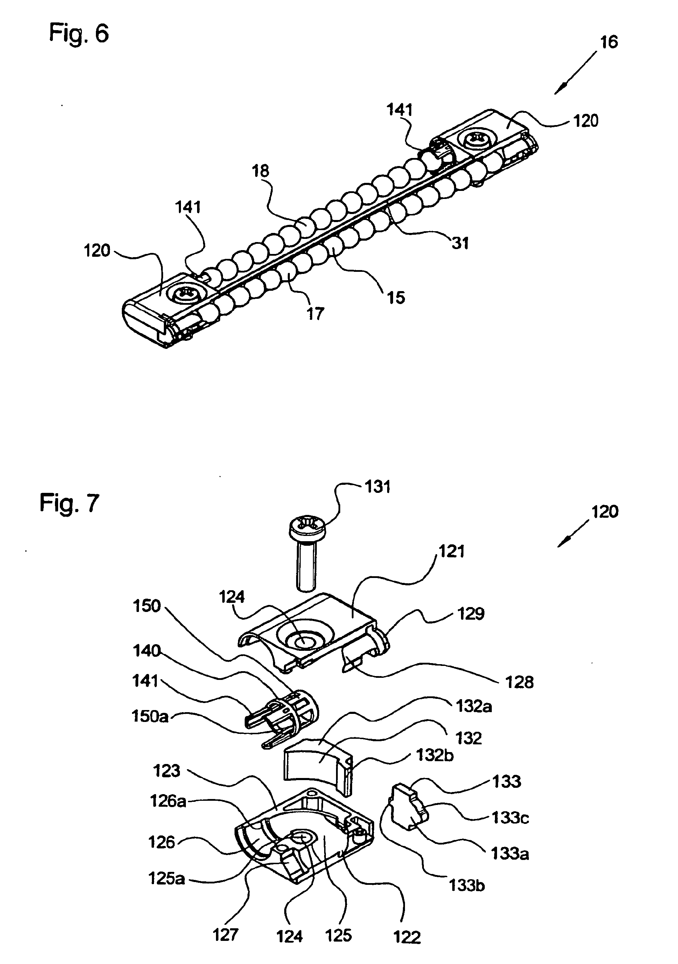

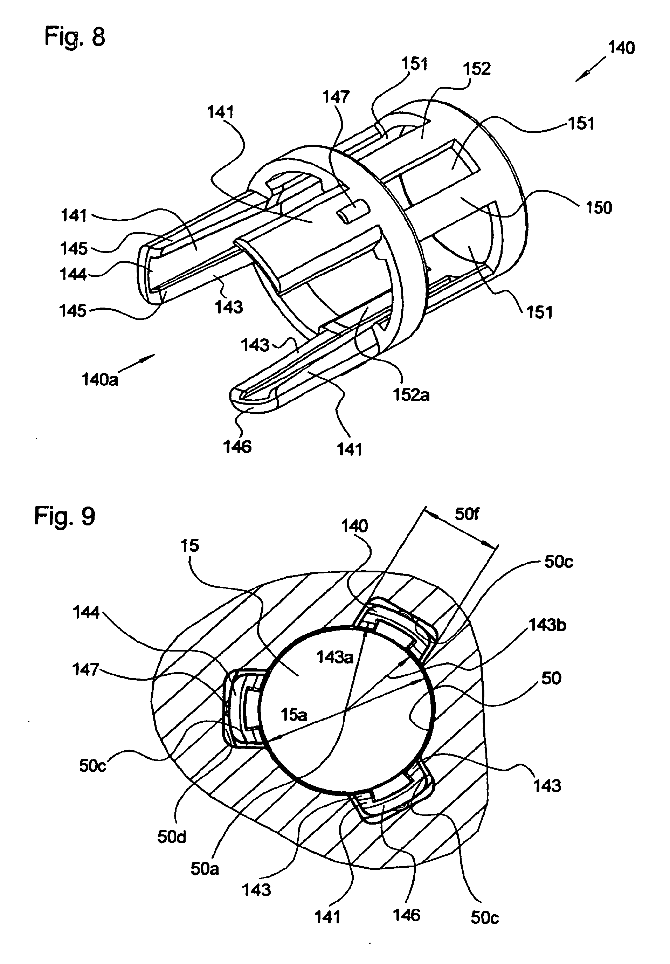

Jeder ersten Wälzfläche 31 ist ein Rücklaufdurchgang 50 zugeordnet, der ohne weitere Nachbearbeitung beim Strangpressen hergestellt wird. Der Rückführkanal 50, dessen Querschnittsform mit Bezug auf Fig. 9 noch näher beschrieben wird, ist an beiden Enden über je einen gebogenen Umlenkdurchgang (Nr. 125; Fig. 7) mit der zugeordneten ersten Wälzfläche 31a verbunden, so dass die Wälzkörper 15 endlos umlaufen können.

Das in Fig. 2 rechte erste Wälzflächenteil 31 ist an einem Verstellabschnitt 45 des ersten Grundkörpers 40 aufgenommen, der gegenüber dem Basisabschnitt 44 des ersten Grundkörpers 40, an dem die Befestigungsmittel (Nr. 42 ; Fig. 1) für die untergeordnete Baugruppe vorgesehen sind, lageverstellbar ist, so dass die Vorspannung der Wälzführung einstellbar ist. Der Verstellabschnitt 45 ist zu diesem Zweck über zwei sich in Längsrichtung erstreckende biegeelastische Stege 47 mit dem Basisabschnitt 44 einstückig verbunden. Der Verstellabschnitt 45 ist mit einem Verstellmittel in Form eines Schraubbolzens 35 versehen, der in ein (grobschematisch dargestelltes) Gewinde 46 des Verstellabschnitts 45 eingeschraubt ist. Da der Schraubbolzen 35 durch die zweite Baugruppe 60 verdeckt ist, ist in letztgenannter ein Durchbruch (Nr. 43; Fig. 1) vorgesehen, so dass er mit einem Schraubwerkzeug, beispielsweise einem Innensechskantschlüssel, verstellt werden kann. Die Stirnfläche 35a des Schraubbolzens stützt sich über eine gesonderte rechteckige Stahlleiste 34 am Basisabschnitt 44 ab. Die Stahlleiste 34 ist notwendig, damit der Schraubbolzen 35 das weiche Aluminium des ersten Grundkörpers 40 nicht plastisch verformt, was ein unerwünschtes Nachlassen der Vorspannkraft auf die Wälzkörper 15 zur Folge hätte. Die genannten biegeelastischen Stege 47 sind jeweils parallel zu den U-Schenkeln 72 der zweiten Baugruppe 60 angeordnet, wobei die Schraubachse des Schraubbolzens 35 senkrecht zu diesen ausgerichtet ist, so dass eine zur Vorspannungseinstellung geeignete Verstellrichtung gegeben ist.

Weiter ist darauf hinzuweisen, dass der erste Grundkörper 40 dem zweiten Grundkörper 70 mit einem geringen Abstand äquidistant gegenüber steht, so dass zwischen diesen ein enger Dichtspalt 19 vorhanden ist der verhindert, dass Fremdkörper zwischen diese Teile gelangen können. Insbesondere soll verhindert werden, dass Fremdkörper zu den Wälzkörpern 15 gelangen können, da dies zu Beschädigungen führen kann, wenn die Fremdkörper zwischen die Wälzkörper 15 und die zugeordneten Wälzflächen 31 a; 61a geraten. Um das Eindringen von Fremdkörpern weiter zu erschweren ist der Dichtspalt 19 ausgehend von der Außenoberfläche 14 der Linearbewegungsvorrichtung 10 mit einem Richtungswechsel 20 versehen. An dieser Stelle sei auch auf die Versteifungsrippe 78 am zweiten Grundkörper 70 hingewiesen, die dessen Biegesteifigkeit erhöhen soll. Die Versteifungsrippe 78 greift in eine Rippenausnehmung 52 am ersten Grundkörper 40 ein, so dass auch in diesem Bereich der genannte enge Dichtspalt 19 vorliegt.

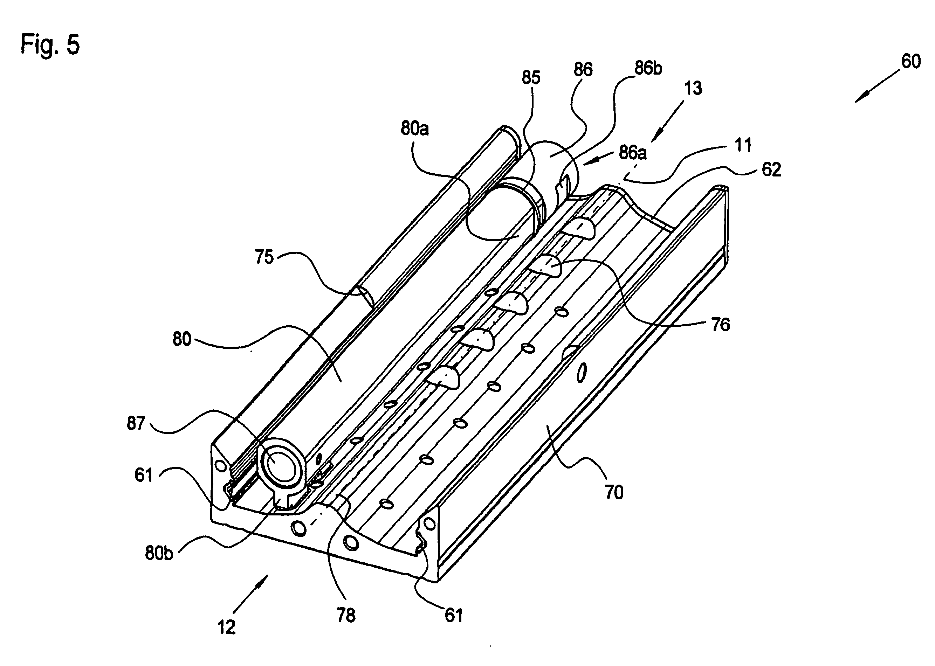

In Fig. 2 ist außerdem die T-förmige Querschnittsform der hinterschnittenen Sensomut 41 zu erkennen. Weiter ist auf das Schubrohr 80 hinzuweisen, das mit Bezug auf Fig. 5 noch näher beschrieben wird. Das Schubrohr 80 ist mit einem geringen Abstand in einer Mutterausnehmung 56 des ersten Grundkörpers 40 aufgenommen.

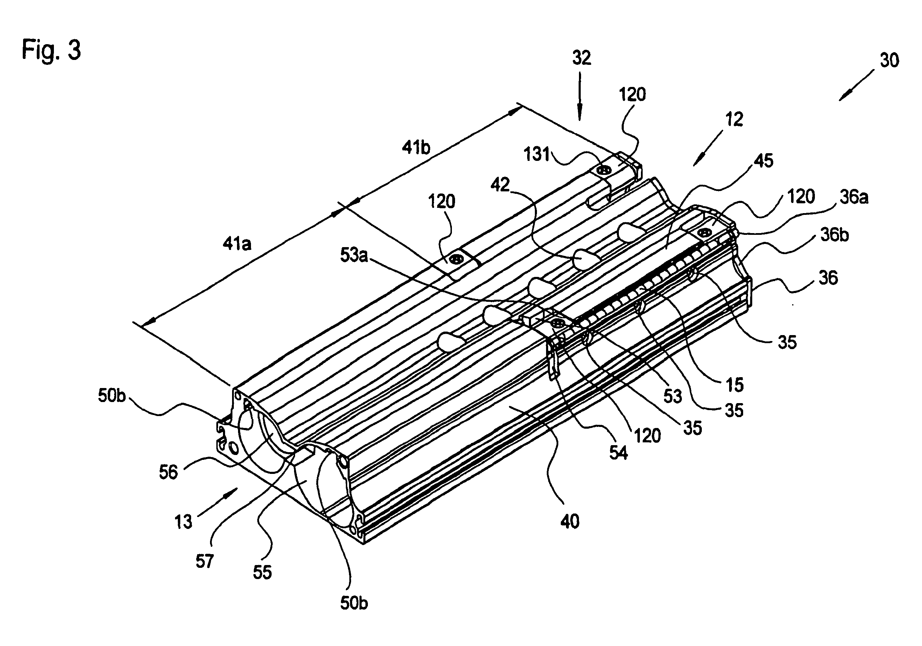

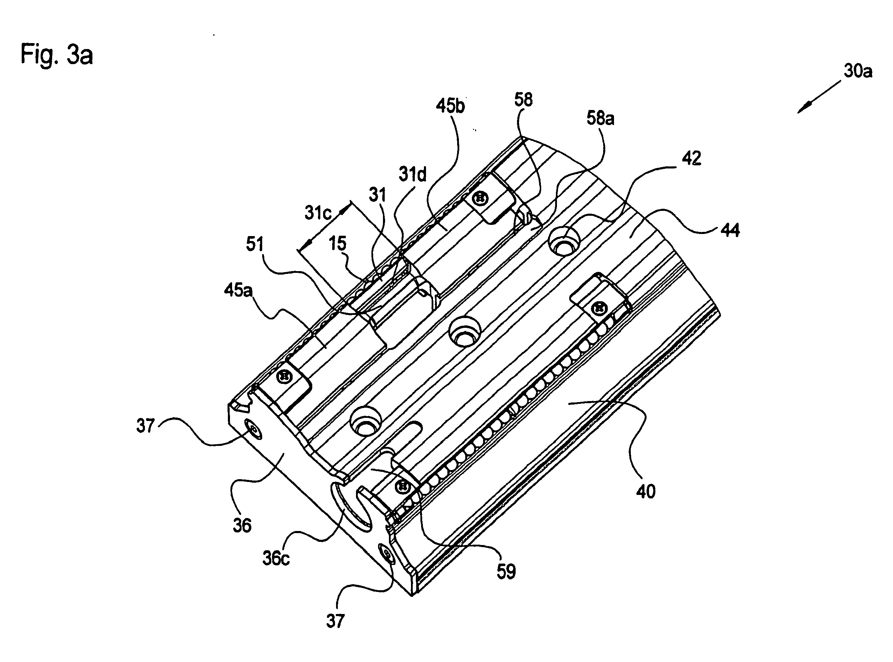

Fig. 3 zeigt die erste Baugruppe 30. Der erste Grundkörper 40 der ersten Baugruppe 30 ist in einen ersten 40a und einen zweiten Längsabschnitt 40b aufgeteilt, die unmittelbar aneinander grenzen. Im zweiten Längsabschnitt 40b, der sich am vorderen Ende 12 der ersten Baugruppe 30 befindet, sind die bereits beschriebenen endlos umlaufenden Wälzkörper 15 vorgesehen. In Fig. 3 sind insbesondere die vier Umlaufbaugruppen 120 zu erkennen, die jeweils einen einzigen gebogenen Umlenkdurchgang (Nr. 125; Fig. 7) aufweisen, der die zugeordnete erste Wälzfläche (Nr. 31 a; Fig. 2) mit dem zugeordneten Rücklaufdurchgang (Nr. 50; Fig. 2) verbindet. Die identisch ausgeführten Umlenkbaugruppen 120 sind so gestaltet, dass sie von einer einzigen Montageseite 32 her montiert werden können, wobei die entsprechenden Befestigungskonturen 53 im ersten Grundkörper 40 ebenfalls ausschließlich von der Montageseite 32 her gefertigt werden können. Die Montageseite 32 ist die in Fig. 3 obere Seite der ersten Baugruppe 30. Als Befestigungskontur ist im ersten Grundkörper 40 für jede Umlenkbaugruppe; je eine Umlenkausnehmung 53 vorgesehen, die mittels eines Schaftfräsers hergestellt ist. An dieser Stelle ist anzumerken, dass sich der Rücklaufdurchgang (Nr. 50; Fig. 2) über die gesamte Länge des stranggepressten Rohteils erstreckt, wobei in Fig. 2 noch die Reste 50b des Rücklaufdurchgangs zu erkennen sind, die im ersten Längsabschnitt 40a des ersten Grundkörpers 40 keine Funktion mehr haben. Die vier Umlenkbaugruppen 120 sind jeweils mit einem einzigen Schraubbolzen 131 am ersten Grundkörper 40 befestigt, wobei der Schraubbolzen 131 ebenfalls von der genannten Montageseite 32 her eingeschraubt werden kann und wobei auch die zugeordnete Gewindebohrung von der Montageseite 32 her eingeschnitten werden kann. Diese Ausgestaltung der Wälzkörperrückführung ermöglicht es, dass eine Bauform der Umlenkbaugruppe 120 in vielen unterschiedlichen Bauformen von Linearbewegungsvorrichtungen 10 eingesetzt werden kann.

Der bereits beschriebene Verstellabschnitt 45 des ersten Grundkörpers 40 ist in Fig. 3 auf der rechten Seite angeordnet. Zu erkennen ist insbesondere, dass drei Schraubbolzen 35 vorgesehen sind, mit denen die Einstellung der Wälzkörpervorspannung vorgenommen werden kann. Mit dem Querschlitz 54 und dem Längsschlitz (Nr. 165; Fig. 2) wird der Verstellabschnitt 45 von dem Basisabschnitt 44 des ersten Grundkörpers 40 getrennt, so dass seine Verstellbewegung nicht verhindert wird.

An der Vorderseite 12 der ersten Baugruppe 30 ist eine gesonderte Verschlussplatte 36 vorgesehen, die aus Stahlblech hergestellt ist. Die Verschlussplatte 36 ist mit geringem Abstand äquidistant zum zweiten Grundkörper (Nr. 70; Fig. 2) ausgeführt. Hinzuweisen ist auf den Anschlagabschnitt 36b der Verschlussplatte 36, der etwas über den ersten Grundkörper 40 übersteht, so dass er als Endanschlag für die zweite Baugruppe wirken kann. Am zweiten Grundkörper ist zu diesem Zweck eine Anschlagfläche (Nr. 79; Fig. 5) vorgesehen, die sich quer zur Längsrichtung erstreckt, so dass sie mit dem Anschlagabschnitt 36b zur Anlage kommen kann. Die Anschlagfläche wird hergestellt, indem die U-Schenkel des Rohteils des ersten Grundkörpers an ihrer Stirnseite entsprechend abgefräst werden. Weiter ist auf den Abstreifvorsprung 36a hinzuweisen, der an die zweite Wälzfläche (Nr. 61a; Fig. 2) der zweiten Baugruppe 60 mit sehr geringem Abstand angepasst ist. Mit diesem sollen Fremdkörper wie Metallspäne von der zweiten Wälzfläche entfernt werden, so dass diese nicht in den Wälzkörperumlauf geraten und dort Schäden verursachen können.

Im ersten Längsabschnitt 40a des ersten Grundkörpers 40 ist eine Motorausnehmung 55 zur Aufnahme des Elektromotors (Nr. 101; Fig. 4) der Antriebsbaugruppe vorgesehen. Die Motorausnehmung 55 ist vollständig mittels einer Fräsbearbeitung hergestellt, da sich im Rohteil des ersten Grundkörpers 40 an dieser Stelle die biegeelastischen Stege (Nr. 47; Fig. 2) des Verstellmechanismus zur Vorspannungseinstellung der Wälzführung befinden. Die Außenoberfläche des ersten Grundkörpers 40 ist im ersten Längsabschnitt 40a ausgehend vom Strangpressrohteil nicht mehr bearbeitet. Diese Kontur musste dementsprechend im zweiten Längsabschnitt 40b weggefräst werden, um die Aufnahmeausnehmung (Nr. 48; Fig. 2) des ersten Wälzflächenteils bereit zu stellen.

Neben der Motorausnehmung 55 ist eine Mutterausnehmung 56 vorgesehen, die sich über die gesamte Länge der ersten Baugruppe 30 erstreckt, wobei die Mutterausnehmung 56 zusammen mit der Motorausnehmung 55 einen Antriebsholraum zur Aufnahme der Antriebsbaugruppe (Nr. 90; Fig. 4) bildet. Die Mutterausnehmung 56 dient zur Aufnahme der Gewindespindel (Nr. 95; Fig. 4) der Antriebsbaugruppe und zur Aufnahme des zugeordneten Schubrohres (Nr. 80; Fig. 5) der zweiten Baugruppe. Sowohl die Mutter- 56 als auch die Motorausnehmung 55 sind zumindest abschnittsweise im Höhenbereich (Nr. 73; Fig. 2) der U-Schenkel des zweiten Grundkörpers angeordnet, so dass die Linearbewegungsvorrichtung eine besonders geringe Bauhöhe aufweist.

Die Motorausnehmung 55 ist über eine Luftaustauschausnehmung 57 mit der Mutterausnehmung 56 verbunden, wobei alle genannten Ausnehmungen durch die Antriebsbaugruppe (Nr. 90; Fig. 1) luftdicht abgedeckt werden. Dementsprechend strömt die durch beim Einfahren der zweiten Baugruppe aufgrund der Bewegung der Mutter und des Schubrohres (Nr. 80; Fig. 5) in der Mutterausnehmung 56 verdrängte Luft über die Luftaustauschausnehmung 57 in die Motorausnehmung 55, dort am Elektromotor (Nr. 101; Fig. 4) vorbei und über den Querschlitz 54 ins Freie. Beim Ausfahren der zweiten Baugruppe stellt sich die umgekehrte Strömungsrichtung ein. Durch das Vorbeiströmen der Luft am Elektromotor wird dieser gekühlt, so dass ein besonders kleiner Elektromotor mit einer hohen Leistungsdichte zum Einsatz kommen kann.

Fig. 3a zeigt eine zweite Ausführungsform 30a der ersten Baugruppe. Diese unterscheidet sich von der ersten Ausführungsform 30 gemäß Fig. 3 nur dadurch, dass das verstellbare erste Wälzflächenteil 31 in einem mittleren Längsabschnitt 31c nicht am ersten Grundkörper 40 abgestützt ist. Diese Maßnahme wurde vorgenommen, um einen Wälzkörperstau durch die verhältnismäßig langen ersten Wälzflächen zu verhindern. Die hohe Länge der ersten Wälzflächen wurde gewählt, damit die erste Baugruppe 30a hohe Drehmomentbelastungen steif abstützen kann.

Der genannte mittlere Längsabschnitt 31c wird dadurch gebildet, dass der Grundkörper 40 in diesem Bereich nahezu vollständig weggefräst wurde, so dass ein erster 45a und ein zweiter Verstellabschnitt 45b des ersten Grundkörpers 40 gebildet wird, die mit Abstand zueinander angeordnet sind. In dem mittleren Längsabschnitt 31c befindet sich somit hinter dem ersten Wälzflächenteil überhaupt kein Material mehr, das dieses abstützen könnte; zwischen dem ersten Wälzflächenteil 31 und dem ersten Grundkörper 40 ist im mittleren Längsabschnitt 31 c also ein Abstand 31d vorhanden. Da das erste Wälzflächenteil 31 nur eine vergleichsweise geringe Steifigkeit aufweist, erfahren die dort ablaufenden Wälzkörper 15 nur eine sehr geringe Last, so dass sie bei Auftreten eines Wälzkörperstaues auch gleitend verschoben werden können, was den Wälzkörperstau sofort wieder auflöst.

Der erste 45a und der zweite Verstellabschnitt 45b sind nur noch über das Rückführrohr 51, in dem der Rücklaufdurchgang (Nr. 50; Fig. 2) angeordnet ist, einstückig miteinander verbunden. Da das Rückführrohr 51 nur eine sehr geringe Wandstärke aufweist, besitzt es eine relative Steifigkeit, so dass der erste 45a und der zweite Verstellabschnitt 45b weitgehend unabhängig voneinander verstellt werden können, um die Vorspannung der Wälzführung einzustellen. Es hat sich als günstig erwiesen, wenn der erste 45a und der zweite Verstellabschnitt 45b nur mit jeweils einem einzigen Verstellmittel in Form eines Schraubbolzens versehen werden, da sich so die Vorspannungseinstellung am schnellsten durchführen lässt.

Im Übrigen ist die zweite Ausführungsform 30a der ersten Baugruppe identisch mit der ersten Ausführungsform 30 ausgeführt. Dies trifft beispielsweise auf die Trennausfräsung 58a zu, mit der ein Trennspalt 58 zwischen dem Verstellabschnitt 45; 45a; 45b und dem Basisabschnitt 44 des ersten Grundkörpers 40 gebildet wird, so dass die gewünschte Verstellbarkeit des Verstellabschnitts gewährleistet ist. Weiter sind in Fig. 3a die Befestigungsschrauben 37 zu erkennen, mit denen die Verschlussplatte 36 am ersten Grundkörper 40 befestigt ist. Zuletzt ist noch auf die Senkbohrungen 42 hinzuweisen, mittels derer die erste Baugruppe 30; 30a an einer übergeordneten Baugruppe befestigt werden kann.

Fig. 4 zeigt die Antriebsbaugruppe 90, die als Ganzes am hinteren Längsende des ersten Grundkörpers befestigt werden kann, wobei das Getriebegehäuse (Nr. 91; Fig. 1) der Übersichtlichkeit halber weggelassen wurde. Die Antriebsbaugruppe 90 umfasst den Elektromotor 101 und die Gewindespindel 95, deren Drehachsen 95a; 101 a parallel zueinander ausgerichtet sind. Die Drehantriebsverbindung zwischen dem Elektromotor 101 und der Gewindespindel 95 erfolgt mittels eines endlosen Zahnriemens 94, wobei das kleinere erste Zahnriemenrad 92 am Elektromotor 101 und das größere zweite Zahnriemenrad 93 an der Gewindespindel 95 vorgesehen ist. Der Elektromotor 101 ist mit den Befestigungsschrauben 105 an einer Motorplatte 104 befestigt. Diese wiederum ist in verschiedenen Querpositionen an dem Getriebegehäuse (Nr. 91; Fig. 1) befestigbar, so dass durch eine Verschiebung des Elektromotors 101 die im Betrieb erforderliche Spannung des Zahnriemens eingestellt werden kann. Die entsprechende Position der Motorplatte 104 wird mit dem Zylinderstift 106 gesichert, der formschlüssig in das Getriebegehäuse (Nr. 91; Fig. 1) eingreift. Der Elektromotor 101 ist mit einem Drehgeber 103 ausgestattet, dessen Signal über die elektrische Leitung 102 an eine (nicht dargestellte) übergeordnete Steuerung weitergegeben wird. Über diese elektrische Leitung 102 wird der Elektromotor 101 von der übergeordneten Steuerung auch mit elektrischem Strom versorgt. Weiter ist der Elektromotor 101 mit einem eigenen Motorgehäuse 101b ausgestattet, so dass die oben beschriebene Kühlluft zwischen dem Motorgehäuse 101b und der Motorausnehmung (Nr. 55; Fig. 3) strömt. Hierdurch wird verhindert, dass mit der Kühlluft angesaugte Fremdkörper in das Innere des Elektromotors 101 gelangen können.

Die Gewindespindel 95 umfasst ein Lagerteil 97 und ein Gewindeteil 96. Bei dem Gewindeteil 96 handelt es sich um einen Abschnitt einer im Gewinderollverfahren hergestellten Kugelgewindespindel, die dementsprechend über seine gesamte Länge mit einem oder mehreren Gewindegängen 95b versehen ist. Beim Gewinderollen werden typischerweise Gewindespindeln mit einer Länge von mehreren Metern hergestellt. Diese werden zur Bildung des Gewindeteils 96 ohne weitere Nachbearbeitung nur auf die gewünschte Länge angeschnitten.

Die Verbindung des Lagerteils 97 mit dem Gewindeteil 96 erfolgt über einen Klemmabschnitt 97b am Lagerteil 97, der direkt auf die Gewindegänge 95b des Gewindeteils 96 einwirkt. Die Gewindegänge 96b wurden aus Kostengründen im Klemmbereich nicht entfernt, da sich auch ohne diese Maßnahme eine genügend starke Klemmkraft erreichen lässt. Der Klemmabschnitt 97b des Lagerteils 97 umfasst zwei Klemmbacken, die durch einen Schlitz 97c voneinander getrennt sind, wobei der Schlitz 97c von einer Klemmschraube 100 durchsetzt ist, um die gewünschte Klemmkraft zu erzeugen.

Das zweite Zahnriemenrad 93 ist als gesondertes Bauteil aus Aluminium ausgeführt und drehfest mit dem Lagerteil 97 aus Stahl verbunden. Weiter ist auf dem Lagerteil 97 ein Radialrillenkugellager 98 vorgesehen, das mittels der Nutmutter 99 an seinem Innenring am Lagerteil 97 festgeklemmt ist. Der Außenring 98a des Radialwälzlagers 98 ist im Getriebegehäuse (Nr. 91; Fig. 1) festgelegt. Die Gewindespindel 95 ist nur mit einer einzigen Drehlagerung ausgestattet. Dementsprechend ist das vorliegende Radialwälzlager zweireihig ausgeführt, damit es die notwendige Belastbarkeit aufweist. Der am Lagerteil 97 verbleibende Zapfen 97a kann beispielsweise zur Anbringung einer Bremse genutzt werden, mit der die Gewindespindel 95 still gesetzt werden kann.

Fig. 5 zeigt die zweite Baugruppe 60 in Form des Tischteils, wobei die Befestigungsplatte (Nr. 82; Fig. 1), die an der vorderen Längsstirnseite 12 des zweiten Grundkörpers 70 angeordnet ist, der Übersichtlichkeit halber weggelassen wurde. Die zweite Baugruppe 60 umfasst den zweiten Grundkörper 70, der sich mit einem U-förmigen Querschnitt in Längsrichtung 11 erstreckt. Weiter umfasst die zweite Baugruppe 60 ein vom zweiten Grundkörper 70 gesondert ausgeführtes Schubrohr 80, das einstückig mit einem Verbindungssteg 80b versehen ist, über den es mit dem zweiten Grundkörper 70 verschraubt ist. In der hintersten Stellung der zweiten Baugruppe 60 greift der Verbindungssteg 80b, der am vorderen Längsende des Schubrohres 80 vorgesehen ist, in die Stegausnehmung (Nr. 59; Fig. 3a) der ersten Baugruppe ein, wobei das Schubrohr 80 gleichzeitig deren Schubrohröffnung (Nr. 36c; Fig. 3a) durchsetzt. Das Schubrohr 80 besteht aus Aluminium und ist im Strangpressverfahren hergestellt, wobei die vordere stirnseitige Öffnung des Schubrohres 80 mit einem gesonderten Verschlussstopfen 87 aus Kunststoff verschlossen ist.

Am hinteren Längsende 13 des Schubrohres ist eine Gewindemutter 86 in Form einer Kugelumlaufmutter angebracht, die in Schraubeingriff mit der Gewindespindel (Nr. 95; Fig. 4) der Antriebsbaugruppe steht. Die Gewindemutter 86 ist in der Bauform einer Einschraubmutter ausgeführt, d. h. sie ist am vorderen Ende mit einem Innengewinde versehen, das in ein entsprechendes Außengewinde am Schubrohr 80 aufgeschraubt ist. Um hierbei ein genügend großes Anzugsmoment der Schraubverbindung zu gewährleisten sind die Gewindemutter 86 und das Schubrohr 80 jeweils mit einem Paar gegenüberliegender Schlüsselflächen 86b; 80a versehen.

Weiter ist am hinteren Ende 13 des Schubrohres 80 eine Spaltdichtung 85 vorgesehen, die in einer umlaufenden Nut des Schubrohres 80 aufgenommen ist. Die Spaltdichtung 85 ist in Umfangsrichtung einmal unterbrochen, so dass sie problemlos auf dem Schubrohr 80 montiert werden kann. Mit der Spaltdichtung 85 soll die Mutterausnehmung (Nr. 56; Fig. 3) an dieser Stelle im Wesentlichen luftdicht abgedichtet werden, um den bereits beschriebenen Kühlluftstrom zu erzeugen. Die Spaltdichtung 85 liegt daher im Wesentlichen dicht an der Mutterausnehmung an.

Die Gewindemutter 86 ist nur auf der vom Schubrohr abgewandten Seite mit einer bekannten Enddichtung 86a versehen, die an der Gewindespindel (Nr. 95; Fig. 4) anliegt. Am gegenüberliegenden Ende ist die Gewindemutter 86 offen, so dass eine Verbindung zum Innenraum des Schubrohres 80 besteht, das mit Schmierfett gefüllt ist. Auf diese Weise ist die Schmierung der Gewindemutter 86 für deren gesamte Lebensdauer sichergestellt.

In Fig. 5 ist weiter zu erkennen, dass sich die Versteifungsrippe 78 ebenso wie die zweiten Wälzflächenteile 61 über die gesamte Länge der zweiten Baugruppe 60 erstrecken. Eine Längsverschiebung der zweiten Wälzflächenteile 61 in der zugeordneten Aufnahmausnehmung (Nr. 74; Fig. 2) wird hierbei durch die Abstreifplatte 62 und die Befestigungsplatte (Nr. 82; Fig. 1) unterbunden.

Fig. 6 zeigt einen Wälzkörperumlauf 16, wobei die umgebende erste Baugruppe der Übersichtlichkeit wegen weggelassen wurde. Der Wälzkörperumlauf 16 umfasst eine Reihe von kugelförmigen Wälzkörpern 15, die in Form einer endlosen Schleife angeordnet ist. Die in Fig. 6 vorderen, tragenden Wälzkörper 17 wälzen auf dem ersten Wälzflächenteil 31ab, welches mit beiden Enden in je eine Umlenkbaugruppe 120 eingreift, in der jeweils nur ein einziger gebogener Umlenkdurchgang (Nr. 125; Fig. 7) vorgesehen ist. Hierfür ist es notwenig, dass jedes erste Wälzflächenteil 61 in Längsrichtung an beiden Enden über den ersten Grundkörper (Nr. 40; Fig. 3) übersteht. Die in Fig. 6 hinteren, rücklaufenden Wälzkörper 18 laufen in dem Rücklaufdurchgang (Nr. 50; Fig. 2), der unmittelbar im ersten Grundkörper der ersten Baugruppe vorgesehen ist. Um eine bestmögliche Ausrichtung zwischen einer Umlenkbaugruppe 120 und dem zugeordneten Rücklaufdurchgang zu erzielen, sind erstgenannte mit fingerartigen Fortsätzen 141 versehen, die in den Rücklaufdurchgang eingreifen.

Fig. 7 zeigt eine Explosionsdarstellung der Umlenkbaugruppe 120. Die Umlenkbaugruppe 120 besteht aus einem ersten 121 und einem zweiten Umlenkteil 122 aus Kunststoff, die weitgehend spiegelsymmetrisch bezüglich der Teilungsebene 123 ausgeführt sind. Die beiden Umlenkteile 121; 122 begrenzen gemeinsam den gebogenen Umlenkdurchgang 125, der die erste Wälzfläche (Nr. 31 a; Fig. 2) mit dem Rücklaufdurchgang (Nr. 50; Fig. 2) verbindet. Der gebogene Umlenkdurchgang 125 besitzt eine kreisförmige Querschnittsform die so bemessen ist, dass die kugelförmigen Wälzkörper ihn mit geringem Spiel durchlaufen können.

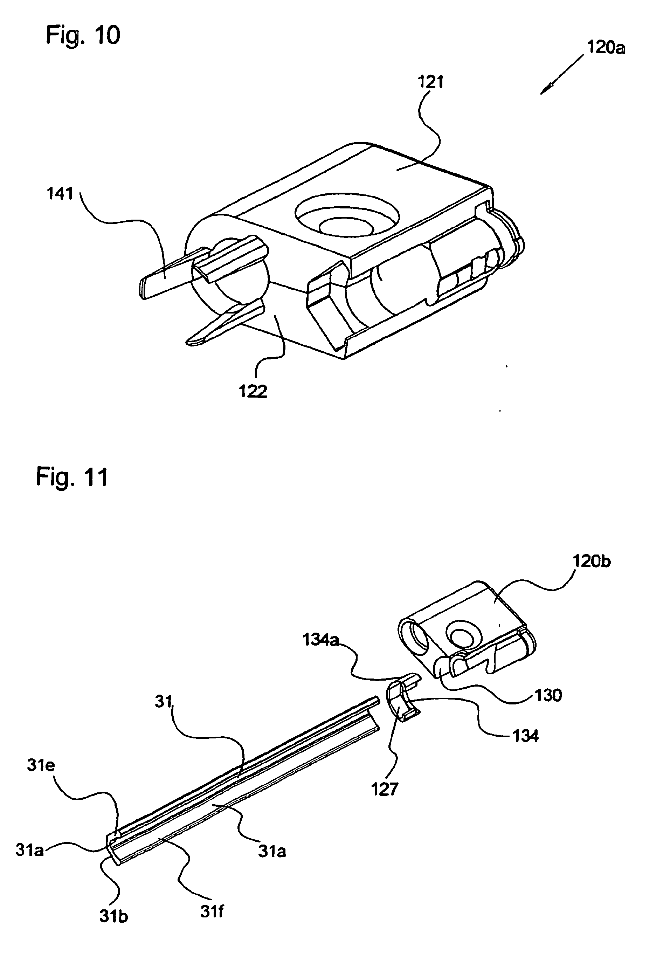

An dem der ersten Wälzfläche zugeordneten Ende des gebogenen Umlenkdurchgangs 125 ist eine Abhebenase 128 vorgesehen, mit der die Wälzkörper von der ersten Wälzfläche abgehoben und in den gebogenen Umlenkdurchgang überfülhrt werden. Die an sich bekannte Abhebenase 128 ist ausschließlich am ersten Umlenkteil 121 ausgebildet, so dass sie mit besonders geringem Abstand zur ersten Wälzfläche angeordnet werden kann. Die Lage der Umlenkbaugruppe 120 gegenüber der ersten Wälzfläche wird mit der Ausrichtausnehmung 127, in die das entsprechende erste Wälzflächenteil eingreift, definiert. Am ersten und am zweiten Umlenkteil 121; 122 ist je eine Hälfte der Ausrichtausnehmung 127 vorgesehen, die jeweils einem V-Schenkel (Nr. 31 e; 31 f in Fig. 11) des ersten Wälzflächenteils zugeordnet ist.

An dem dem Rücklaufdurchgang zugeordneten Ende des gebogenen Umlenkdurchgangs ist ein gesondertes Überführungsteil 140 aus Kunststoff vorgesehen, das mit Bezug auf Fig. 8 und 9 noch näher erläutert wird. Das Überführungsteil 140 ist in einer konischen Ausnehmung 126 aufgenommen, deren kleinster Durchmesser 126a an den zugeordneten Abschnitt des Überführungsstücks 140 im Wesentlichen spielfrei angepasst ist. Aufgrund der konischen Form der genannten Ausnehmung 126 steht dem biegeverformbaren Rohr 150 des Überführungsteils 140 in Querrichtung etwas Freiraum zur Verfügung, so dass es sich entsprechend verbiegen kann, um einen Versatz zwischen dem gebogenen Umlenkdurchgang 125 und dem Rücklaufdurchgang auszugleichen. Hierfür greift es mit drei fingerartigen Fortsätzen 141 in angepasste Nuten (Nr. 50c; Fig. 9) des Rücklaufdurchgangs ein. Das Überfürungsteil 140 liegt mit der Stirnfläche 150a des biegsamen Rohres 150 an einer zugeordneten Stirnfläche (Nr. 53a; Fig. 3) des ersten Grundkörpers an, so dass es im Wesentlichen spielfrei in der konischen Ausnehmung 126 gehalten ist.

Im Krümmungsmittelpunkt 125a des gebogenen Umlenkdurchgangs ist im ersten und im zweiten Umlenkteil 121; 122 jeweils ein Durchbruch 124 vorgesehen, der von einem Befestigungsbolzen 131 in Form eines Schraubbolzens durchsetzt wird. Hiermit werden einerseits die beiden Umlenkteile 121; 122 fest miteinander verbunden und andererseits die gesamte Umlenkbaugruppe 120 am ersten Grundkörper befestigt. Anstatt des Schraubbolzens 131 kann beispielsweise auch ein Blindniet oder ein ähnlicher Befestigungsbolzen zum Einsatz kommen, der ausschließlich von einer Seite, nämlich der Montageseite (Nr. 32; Fig. 3) her montiert werden kann.

Weiter ist in der Umlenkbaugruppe 120 ein Schmiersystem vorgesehen, das von einem ersten 132 und einem zweiten Schmierölspeicherkörper 133, der aus einem offenzelligen Schaumstoff besteht, gebildet wird. Beide Schmierölspeicherkörper 132; 133 sind jeweils mittels Wasserstrahlschneiden aus einem Plattenmaterial ausgeschnitten, so dass sie die Form eines Profilkörpers mit einem im Wesentlichen konstanten Querschnitt 132a; 132b aufweisen. Der erste Schmierölspeicherkörper 132 ist derjenige mit dem größeren Volumen, weshalb dieser den Hauptteil des Speichervolumens für das Schmieröl bereit stellt. An dem ersten Schmierölspeicherkörper 132 ist einstückig ein Auftragabschnitt 132b vorgesehen, der in den gebogenen Umlenkdurchgang 125 hinein ragt, so dass die dort entlanglaufenden Wälzkörper an diesem entlang streifen, wodurch Schmieröl aus dem ersten Schmierölspeicherkörper 132 auf die Wälzkörper übertragen wird.

Der zweite Schmierölspeicherkörper 133 gleitet unmittelbar auf der ersten Wälzfläche entlang, so dass diese geschmiert und von kleinen Schmutzpartikeln befreit wird. Die Außenkontur des Abstreifabschnitts 133c des zweiten Schmierölspeicherkörpers 133 ist dementsprechend genau an das Querschnittsprofil der ersten Wälzfläche angepasst. Die Querschnittsebenen 132a; 133a des ersten und des zweiten Schmierölspeicherkörpers 132; 133 sind senkrecht zueinander ausgerichtet, wobei der zweite Schmierölspeicherkörper 133 mit einer Nase 133b versehen ist, mit der er den ersten Schmierölspeicherkörper berührt, so dass Schmieröl vom ersten auf den zweiten Schmierölspeicherkörper übertragen werden kann. Hierbei ist beabsichtigt, das gesamte gespeicherte Schmierölvolumen bedarfsgerecht auf die beiden Schmierstellen zu verteilen. Dies kann durch geeignete Dimensionierung der genannten Nase 133b, insbesondere deren Berührfläche zum ersten Schmierölspeicherkörper 132 erreicht werden. Hinzuweisen ist noch auf die Abstreifplatte 129, mit der der verhältnismäßig dünne zweite Schmierölspeicherkörper gegen Verbiegung abgestützt wird. Die Abstreifplatte 129 ist mit geringem Abstand äquidistant zur ersten Wälzfläche ausgebildet und wie die Abhebenase 128, die den zweiten Schmierölspeicherkörper ebenfalls gegen Verbiegung abstützt, vollständig am ersten Umlenkteil 121 ausgebildet. Mit der Abstreifplatte 129 können auch größere Fremdkörper von der ersten Wälzfläche entfernt werden, soweit dies nicht bereits durch den Abstreifvorsprung (Nr. 36a; Fig. 3) der Verschlussplatte bewirkt worden ist.

Fig. 8 zeigt das Überführungsteil 140 stark vergrößert. Das Überführungsteil 140 ist einstückig ausgeführt und aus Kunststoff im Spritzgussverfahren gefertigt. Das Überführungsteil 140 umfasst ein biegeverformbares Rohr 150 mit einer im Wesentlichen kreisförmigen Querschnittsform, an dessen vorderem Ende drei identische fingerartige Fortsätze 141 vorgesehen sind, die gleichmäßig über den Umfang des biegeverformbaren Rohres 150 angeordnet sind. Die fingerartigen Fortsätze 141 besitzen über ihre gesamte Länge eine U-förmige Querschnittsform mit einer Basis 144, von der je zwei U-Schenkel 145 rechtwinklig abstehen. Die Stirnflächen der U-Schenkel bilden Führungsflächen 143 für die durch das Überführungsteil 140 hindurch laufenden kugelförmigen Wälzkörper. Die Länge der U-Schenkel 145 nimmt vom freien Ende der fingerartigen Fortsätze 141 zum biegsamen Rohr hin zu, so dass die genannten Führungsflächen 143 geneigt zum Verlauf des Rücklaufdurchgangs angeordnet sind. Hierbei ist anzumerken, dass die Basis 144 der fingerartigen Fortsätze 141 parallel zum Rücklaufdurchgang ausgerichtet ist, wobei sie mit einem Anlagefortsatz 147 unmittelbar am Grund der zugeordneten Nut (Nr. 50c; Fig. 9) im Rücklaufdurchgang anliegt. Hinsichtlich der genauen Anordnung der Führungsflächen 143 bezüglich des Rücklaufdurchgangs wird auf die Ausführungen zu Fig. 9 verwiesen.

Das biegeverformbare Rohr 150 ist mit insgesamt sechs Fenstern 151 versehen, durch die dessen Biegeelastizität erhöht werden soll. Das biegeverformbare Rohr bildet somit einen flexiblen Durchgang 140a für die Wälzkörper, mit dem ein möglicher Versatz zwischen dem Rücklaufdurchgang und dem gebogenen Umlenkdurchgang ausgeglichen werden kann. Die zwischen den Fenstern 151 gebildeten Stege 152 sind in Verlängerung der U-Schenkel 145 der fingerartigen Fortsätze 141 vorgesehen, so dass die dort vorgesehenen Führungsflächen 143 für die Wälzkörper auf den Stegen 152a unterbrechungsfrei fortgesetzt werden können.

Fig. 9 zeigt einen Querschnitt eines Rücklaufdurchgangs 50 mit eingesetztem Überführungsteil 140. Der Rücklaufdurchgang 50 besitzt eine im Wesentlichen kreisförmige Querschnittsform, die mit geringem Spiel an die Wälzkörper 15 angepasst ist. Über den Umfang des Rücklaufdurchgangs 50 sind insgesamt drei Nuten 50c gleichmäßig verteilt angeordnet. Dieses Nuten 50c erstrecken sich über die gesamte Länge des Rücklaufdurchgangs 50, da dieser zusammen mit den Nuten 50c bereits beim Strangpressen des ersten Grundkörpers hergestellt und nicht mehr weiter bearbeitet wird. In den Nuten 50c ist je ein fingerartiger Fortsatz 141 des Umlenkteils 140 aufgenommen, wobei die Nuten 50c mit geringem Abstand zu diesem ausgeführt sind. An der Basis 144 eines jeden fingerartigen Fortsatzes 140 ist je ein Anlagefortsatz 147 vorgesehen, der jeweils am Grund 50d der Nut 50c anliegt. Die Nuten 50c und die Anlagefortsätze 147 sind hierbei so aufeinander abgestimmt, dass das Überführungsteil 140 mit einer geringen Vorspannung im Rücklaufdurchgang 50 aufgenommen ist. Die Breite 50f der Nuten 50c beträgt etwa 40% des Kugeldurchmessers 15a, so dass die Wälzkörper 15 abseits der Nuten 50c noch ausreichend im Rücklaufdurchgang 50 geführt sind.

Aufgrund ihres geneigten Verlaufes sind in Fig. 9 auch die Führungsflächen 143 für die Wälzkörper 15 zu erkennen. Das vordere Ende einer jeden Führungsfläche ist jeweils so weit entfernt 143a von der Mittelachse 50a des Rücklaufdurchgangs 50 angeordnet, dass sichergestellt ist, dass es versenkt in der Nut 50c angeordnet ist. Somit ist ausgeschlossen, dass die vom Rücklaufdurchgang 50 her kommenden in den gebogenen Umlenkdurchgang einlaufenden Wälzkörper 15 mit der Stirnfläche 146 der fingerartigen Fortsätze 141 kollidieren können.

Das hintere Ende der Führungsflächen an den fingerartigen Fortsätzen ist so weit entfernt 143b von der Mittelachse 50a des Rücklaufdurchgangs 50 angeordnet, dass es um einen geringen Betrag aus der zugeordneten Nut 50c herausragt. Somit ist ausgeschlossen, dass die vom gebogenen Umlenkdurchgang her kommenden in den Rücklaufdurchgang 50 einlaufenden Wälzkörper 15 mit der Stirnfläche des ersten Grundkörpers (Nr. 53a; Fig. 3) kollidieren können. Der genannte geringe Überstand ist aufgrund seiner geringen Größe in der maßstäblichen Fig. 9 nur schwer zu erkennen.

Fig. 10 zeigt eine zweite Ausführungsform der Umlenkbaugruppe 120a, bei der gegenüber der in Fig. 9 dargestellten ersten Ausführungsform 120 die fingerartigen Fortsätze 141 einstückig mit dem ersten 121 bzw. zweiten Umlenkteil 122 ausgeführt wurden. Dementsprechend entfällt bei dieser Ausführungsform das gesonderte Überführungsteil, weshalb die zweite Ausführungsform 120a etwas kostengünstiger als die erste Ausführungsform 120 ist, wobei allerdings auf die Vorteile des flexiblen Durchgangs (Nr. 140a; Fig. 8) verzichtet werden muss. Die erste Ausführungsform 120 der Umlenkbaugruppe, die im Übrigen identisch mit der zweiten Ausführungsform 120a ausgebildet ist, ist aufgrund dieser Vorteile bevorzugt.

Fig. 11 zeigt eine dritte Ausführungsform 120b der Umlenkbaugruppe, bei der das erste Wälzflächenteil 31 drehbar in der Umlenkbaugruppe 120b aufgenommen ist. Die Umlenkbaugruppe 120b umfasst zu diesem Zweck ein gesondertes Halteteil 134, in der die Ausrichtausnehmung 127 für das erste Wälzflächenteil vorgesehen ist. Das Wälzflächenteil 31 ist hierbei, wie bei allen anderen Ausführungsformen der Umlenkbaugruppe, als Profilkörper mit einer konstanten Querschnittsform ausgeführt, wobei an beiden Enden des ersten Wälzflächenteils ebene Längsstirnflächen 31b vorgesehen sind. Die Querschnittsform des ersten Wälzflächenteils 31 ist im Wesentlichen V-förmig mit einem ersten 3 1 e und einem zweiten V-Schenkel 31f. An der Außenseite ist das Halteteil 134 mit einer Kreiszylinderfläche 134a versehen, deren Längsachse durch den Mittelpunkt der kugelförmigen Wälzkörper verläuft. Die Kreiszylinderfläche 134a liegt an einer angepassten Fläche 130 der verbleibenden Umlenkbaugruppe 120b an, so dass das erste Wälzflächenteil 31 um den Mittelpunkt der Wälzkörper drehbar bezüglich der Umlenkbaugruppe 120b ist. Durch diese Maßnahme kann ein und dieselbe Bauform der Umlenkbaugruppe 120b in verschiedenen Bauformen von Linearbewegungsvorrichtungen eingesetzt werden. Mit der beschriebenen Drehbeweglichkeit sollen hierbei den unterschiedlichen Platzverhältnissen in den verschiedenen Linearbewegungsvonrichtungen Rechnung getragen werden. Gleichwohl ist die erste Ausführungsform 120 der Umlenkbaugruppe, die im Übrigen identisch zur dritten Ausführungsform 120b der Umlenkbaugruppe ausgebildet ist, aufgrund des geringem Herstellungsaufwands bevorzugt.

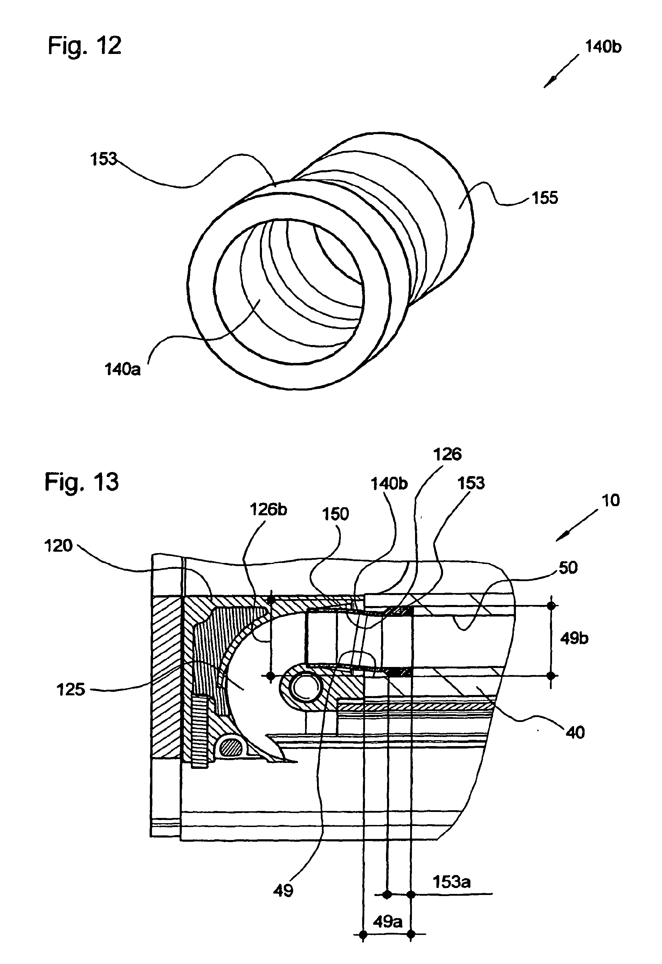

Fig. 12 zeigt eine perspektivische Ansicht einer zweiten Ausführungsform des Überführungsteils 140b, wobei der verformte Zustand gemäß Fig. 13 dargestellt ist. Im unverformten Zustand ist das Überführungsteil 140b rotationssymmetrisch ausgeführt. Es umfasst ein dünnwandiges, kreiszylindrisches, geschlossenes Rohr 155, an dessen einem Ende ein radialer Wulst 153 vorgesehen ist, dessen Außenumfangsfläche ebenfalls kreiszylindrisch ausgeführt ist. Die Innenoberfläche des dünnwandigen Rohres 155 bildet den flexiblen Durchgang 140a. Das Überführungsteil 140b besteht aus Kunststoff und wird im Spritzgussverfahren hergestellt.

Fig. 13 stellt das Überführungsteil 140b in eingebautem Zustand dar. Die Umlenkbaugruppe 120 ist entsprechend der ersten Ausführungsform ausgebildet, die mit Bezug auf Fig. 7 bereits ausführlich beschrieben wurde, so dass an dieser Stelle auf eine Wiederholung verzichtet werden kann. Bei dem Rücklaufdurchgang 50 wurde auf die sich in Längsrichtung erstreckenden Nuten verzichtet, so dass dieser im Querschnitt betrachtet kreisförmig ausgebildet ist. Stattdessen ist am Ende des ersten Grundkörpers 40 eine an den radialen Wulst 153 des Überführungsteils 140b angepasste Ausnehmung 49 vorgesehen. Die Ausnehmung 49 ist ebenfalls kreiszylindrisch ausgeführt und besitzt den gleichen Durchmesser 126b wie der radiale Wulst 153. Die Tiefe 49a der Ausnehmung 49 ist größer als die Breite 153a des radialen Wulstes 153, so dass das biegeverformbare Rohr 150 eine große Länge und damit eine genügend große Elastizität aufweist.

In Fig. 13 ist ein Einbaufall dargestellt, bei dem ein besonders großer Fluchtungsfehler zwischen dem Umlenkdurchgang 125 und dem Rücklaufdurchgang 50 vorhanden ist. Dementsprechend liegt eine besonders starke Biegeverformung des biegeverformbaren Rohres 150 vor. Dennoch befinden sich im Weg der kugelförmigen Wälzkörper keine nennenswerten Störstellen, die deren geräuscharmen Ablauf behindern könnten.

Hinzuweisen ist noch darauf, dass die Öffnungsweite 126b der konischen Ausnehmung 126 größer als die Öffnungsweite 49b der Ausnehmung 49 ist. Diese Maßnahme dient dem Fluchtungsfehlerausgleich zwischen den sich unmittelbar gegenüberstehenden Ausnehmungen 126; 49.

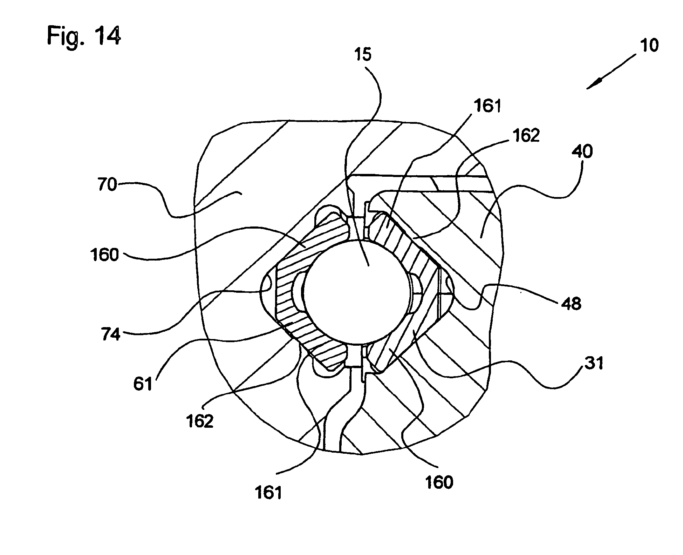

Fig. 14 zeigt einen Querschnitt der Linearbewegungsvorrichtung 10 im Bereich des ersten und des zweiten Wälzflächenteils 31; 61. Zu erkennen ist insbesondere die Gestaltung der Anlagegeometrie des ersten Wälzflächenteils 31 am ersten Grundkörper 40 und des zweiten Wälzflächenteils 61 am zweiten Grundkörper 70, wobei die genannten Geometrien im Wesentlichen punktsymmetrisch zum Mittelpunkt der Wälzkörper 15 ausgeführt sind. Die beiden im Wesentlichen V-förmigen Wälzflächenteile 31; 61 liegen mit einem ersten Schenkel 160 jeweils vollflächig am zugeordneten Grundkörper 40; 70 an, wobei am zweiten Schenkel 161 eine näherungsweise linienförmige Berührung zwischen den Wälzflächenteilen 31; 61 und den zugeordneten Grundkörpern 40; 70 vorgesehen ist. Hierfür ist an den Grundkörpern 40; 70 jeweils ein schmaler Fortsatz 162 angebracht, der sich jeweils über die gesamte Länge des zugeordneten Wälzflächenteils 31; 61 erstreckt. Die Wälzflächenteile 31; 61 liegen mit ihrer ebenen Rückseite an diesem Fortsatz 162 an. Durch diese Maßnahme sollen Formabweichungen zwischen den Aufnahmeausnehmungen 48; 74 und den zugeordneten Wälzflächenteilen 31; 61 kompensiert werden. Insbesondere soll erreicht werden, dass die Wälzflächenteile 31; 61 auch unter ungünstigen Toleranzbedingungen in vorhersehbarer Weise am zugeordneten Grundkörper 40; 70 anliegen, damit die Wälzkörper 15 entlang der gesamten Länge der Wälzflächenteile 31; 61 unter einer im Wesentlichen konstanten Vorspannung laufen.

## Patentansprüche

1. Linearbewegungsvorrichtung (10) mit einer ersten (30; 30a) und einer gegenüber der ersten linearbeweglichen zweiten Baugruppe (60), wobei an der ersten Baugruppe (30; 30a) wenigstens eine sich in eine Längsrichtung (11) erstreckende erste Wälzfläche (31a) vorgesehen ist, die einer zweiten Wälzfläche (61a) gegenübersteht, die an der zweiten Baugruppe (60) vorgesehen ist, wobei zwischen der ersten und der zweiten Wälzfläche (31 a; 61a) eine Reihe von Wälzkörpern (15) angeordnet ist, die endlos umlaufen kann, wobei die erste Baugruppe (30; 30a) eine zur Längsrichtung (11) parallele, drehbare Gewindespindel (95) umfasst, die mit einer Gewindemutter (86) in Schraubeingriff steht, wobei die Gewindemutter (86) Bestandteil der zweiten Baugruppe ist, wobei die erste Baugruppe (30; 30a) weiter einen Elektromotor (101) umfasst, der in Drehantriebsverbindung mit der Gewindespindel (95) steht und dessen Drehachse (101a) parallel zur Gewindespindel (95) verläuft, und wobei die erste Baugruppe (30; 30a) einen einstückigen ersten Grundkörper (40) umfasst,
**dadurch gekennzeichnet, dass** die Gewindespindel (95) und der Elektromotor (101) im Bereich des ersten Grundkörpers (40) nebeneinander angeordnet sind, wobei sich der Elektromotor (101) über einen ersten Längsabschnitt (40a) des ersten Grundkörpers (40) erstreckt, während sich die erste Wälzfläche (31a) über einen zweiten (40b) vom ersten (40a) verschiedenen Längsabschnitt des ersten Grundkörpers (40) erstreckt, wobei sich die Gewindespindel (95) über den ersten (40a) und wenigstens abschnittsweise über den zweiten Längsabschnitt (40b) des ersten Grundkörpers (40) erstreckt und wobei die Wälzkörper (15) in der ersten Baugruppe (30; 30a) endlos umlaufen können.

2. Linearbewegungsvorrichtung nach Anspruch 1,
**dadurch gekennzeichnet, dass** die zweite Baugruppe (60) im Wesentlichen U-förmig mit einer Basis (71) und zwei U-Schenkeln (72) ausgeführt ist, wobei an den Innenseiten der U-Schenkel (72) wenigstens je eine zweite Wälzfläche vorgesehen ist, wobei die U-Schenkel (72) den ersten Grundkörper (40) umgreifen, wobei sich die Gewindespindel (95) und/oder der Elektromotor (101) wenigstens abschnittsweise im Höhenbereich (73) der U-Schenkel (72) erstrecken und zwischen diesen angeordnet sind.

3. Linearbewegungsvorrichtung nach einem der vorstehenden Ansprüche,
**dadurch gekennzeichnet, dass** der Elektromotor (101) und die Gewindespindel (95) von dem ersten Grundkörper (40) im Wesentlichen vollständig umschlossen sind.

4. Linearbewegungsvorrichtung nach Anspruch 3,
**dadurch gekennzeichnet, dass** die Gewindemutter (86) in der Art eines Kolbens in einer angepassten Mutterausnehmung (56) des ersten Grundkörpers (40) aufgenommen ist, so dass ihre Relativbewegung zum ersten Grundkörper (40) einen Luftstrom erzeugen kann, wobei der Elektromotor (101) in einer Motorausnehmung (55) des ersten Grundkörpers (40) aufgenommen ist, die in Luftaustauschverbindung mit der Mutterausnehmung (56) steht, so dass der genannte Luftstrom den Elektromotor (101) kühlen kann.

5. Linearbewegungsvorrichtung nach Anspruch 4,
**dadurch gekennzeichnet, dass** zwischen der Mutterausnehmung (56) und der Gewindemutter (86) oder einem mit der Gewindemutter (86) fest verbundenen Bauteil (80) eine gesonderte Spaltdichtung (85) vorgesehen ist, die den Spalt zwischen der Mutterausnehmung (56) und der Gewindemutter (86) bzw. dem damit fest verbundenen Bauteil (80) im Wesentlichen luftdicht verschließt.

6. Linearbewegungsvorrichtung nach einem der Ansprüche 4 oder 5,
**dadurch gekennzeichnet, dass** die Gewindemutter (86) über ein Schubrohr (85), das die Gewindespindel (95) umgibt, mit der verbleibenden zweiten Baugruppe (60) in Antriebsverbindung steht, wobei die Gewindemutter (86) eine Wälzkörpergewindemutter ist, die wenigstens an der vom Schubrohr (85) abgewandten Ende mit einer Enddichtung (86a) versehen ist.

7. Linearbewegungsvorrichtung nach Anspruch 6,
**dadurch gekennzeichnet, dass** an der dem Schubrohr (85) zugewandten Seite der Gewindemutter (86) keine Enddichtung vorgesehen ist, wobei das Schubrohr (85) mit Schmierfett gefüllt ist.

8. Linearbewegungsvorrichtung nach einem der Ansprüche 4 bis 7,
**dadurch gekennzeichnet, dass** die Mutterausnehmung (56) und die Motorausnehmung (55) gesondert voneinander an einem hinteren (13) Längsende des ersten Grundkörpers (40) vorgesehen sind, wobei zwischen der Mutterausnehmung (56) und der Motorausnehmung (55) eine Luftübertrittsausnehmung (57) vorgesehen ist, so dass die Mutterausnehmung (56) mit der Motorausnehmung (55) in Luftaustauschverbindung steht.

9. Linearbewegungsvorrichtung nach einem der vorstehenden Ansprüche,
**dadurch gekennzeichnet, dass** der Elektromotor (101) mit der Gewindespindel (95) und einer zugeordneten Drehlagerung (98) zu einer Antriebsbaugruppe (90) zusammengefasst sind, die als Ganzes an dem ersten Grundkörper (40) montiert werden kann.

10. Linearbewegungsvorrichtung nach Anspruch 9, rückbezogen auf Anspruch 8,
**dadurch gekennzeichnet, dass** die Antriebsbaugruppe (90) die Mutter-, die Motor- und die Luftübertrittsausnehmung (56; 55; 57) im Wesentlichen luftdicht abdeckt.

11. Linearbewegungsvorrichtung nach einem der vorstehenden Ansprüche,
**dadurch gekennzeichnet, dass** die Gewindespindel (95) ein gesondertes Lagerteil (97) umfasst, das über ein Radialwälzlager (98) in der ersten Baugruppe (30; 30a), vorzugsweise in der Antriebsbaugruppe (90), drehbar gelagert ist, wobei ein vom Lagerteil (97) gesondertes Gewindeteil (96) vorgesehen ist, das über seine gesamte Länge mit wenigstens einem schraubenförmigen Gewindegang (95b) versehen ist, wobei das Gewindeteil (96) im Lagerteil (97) festgeklemmt ist.

## Claims

1. Linear movement device (10) with a first subassembly (30; 30a) and with a second subassembly (60) linearly moveable with respect to the first, there being provided on the first subassembly (30; 30a) at least one first rolling surface (31a) which extends in a longitudinal direction (11) and stands opposite a second rolling surface (61a) which is provided on the second subassembly (60), there being arranged between the first and the second rolling surface (31a; 61a) a row of rolling bodies (15) which can revolve endlessly, the first subassembly (30; 30a) comprising a rotatable threaded spindle (95) which is parallel to the longitudinal direction (11) and is in screwing engagement with a threaded nut (86), the threaded nut (86) being an integral part of the second subassembly, the first subassembly (30; 30a) comprising, further, an electric motor (101) which is in rotary drive connection with the threaded spindle (95) and the axis of rotation (101a) of which runs parallel to the threaded spindle (95), and the first subassembly (30; 30a) comprising a one-piece first basic body (40), **characterized in that** the threaded spindle (95) and the electric motor (101) are arranged next to one another in the region of the first basic body (40), the electric motor (101) extending over a first longitudinal portion (40a) of the first basic body (40), while the first rolling surface (31a) extends over a second longitudinal portion (40b), different from the first (40a), of the first basic body (40), the threaded spindle (95) extending over the first longitudinal portion (40a) and at least partially over the second longitudinal portion (40b) of the first basic body (40), and the rolling bodies (15) being capable of revolving endlessly in the first subassembly (30; 30a).

2. Linear movement device according to Claim 1, **characterized in that** the second subassembly (60) is of essentially U-shaped design with a base (71) and with two U-legs (72), at least one second rolling surface being provided in each case on the insides of the U-legs (72), the U-legs (72) surrounding the first basic body (40), the threaded spindle (95) and/or the electric motor (101) extending at least partially within the height range (73) of the U-legs (72) and being arranged between these.

3. Linear movement device according to either of the preceding claims, **characterized in that** the electric motor (101) and the threaded spindle (95) are surrounded essentially completely by the first basic body (40).

4. Linear movement device according to Claim 3, **characterized in that** the threaded nut (86) is received in the manner of a piston in an adapted nut recess (56) of the first basic body (40), so that the relative movement of the said threaded nut with respect to the first basic body (40) can generate an air stream, the electric motor (101) being received in a motor recess (55) of the first basic body (40), the said motor recess being in air exchange connection with the nut recess (56), so that the said air stream can cool the electric motor (101).

5. Linear movement device according to Claim 4, **characterized in that** a separate gap seal (85) is provided between the nut recess (56) and the threaded nut (86) or a component (80) connected fixedly to the threaded nut (86) and closes, essentially air-tight, the gap between the nut recess (56) and the threaded nut (86) or the components (80) connected fixedly thereto.

6. Linear movement device according to either one of Claims 4 and 5, **characterized in that** the threaded nut (86) is in drive connection with the remaining second subassembly (60) via a push tube (85) which surrounds the threaded spindle (95), the threaded nut (86) being a rolling-body threaded nut which is provided with an end seal (86a) at least at the end facing away from the push tube (85).

7. Linear movement device according to Claim 6, **characterized in that** no end seal is provided on that side of the threaded nut (86) which faces the push tube (85), the push tube (85) being filled with lubricating grease.

8. Linear movement device according to one of Claims 4 to 7, **characterized in that** the nut recess (56) and the motor recess (55) are provided separately from one another at a rear longitudinal end (13) of the first basic body (40), an air overflow recess (57) being provided between the nut recess (56) and the motor recess (55), so that the nut recess (56) is in air exchange connection with the motor recess (55).

9. Linear movement device according to one of the preceding claims, **characterized in that** the electric motor (101) is combined with the threaded spindle (95) and with an assigned rotary mounting (98) to form a drive subassembly (90) which can be mounted as a whole on the first basic body (40).

10. Linear movement device according to Claim 9, referring back to Claim 8, **characterized in that** the drive subassembly (90) covers, essentially air-tight, the nut recess, the motor recess and the air overflow recess (56; 55; 57).

11. Linear movement device according to one of the preceding claims, **characterized in that** the threaded spindle (95) comprises a separate bearing part (97) which is mounted rotatably via a radial rolling bearing (98) in the first subassembly (30; 30a), preferably in the drive subassembly (90), a threaded part (96) separate from the bearing part (97) being provided, which is provided over its entire length with at least one screw-like thread flight (95b), the threaded part (96) being firmly clamped in the bearing part (97).

## Revendications

1. Dispositif de déplacement linéaire (10) comprenant un premier module (30 ; 30a) et un deuxième module (60) déplaçable linéairement par rapport au premier, au moins une première surface de roulement (31a) s'étendant dans une direction longitudinale (11) étant prévue sur le premier module (30 ; 30a), laquelle est opposée à une deuxième surface de roulement (61a), qui est prévue sur le deuxième module (60), une série de corps de roulement (15) étant disposée entre la première et la deuxième surface de roulement (31a ; 61a), les corps de roulement pouvant circuler sans fin, le premier module (30 ; 30a) comprenant une broche filetée (95) rotative parallèle à la direction longitudinale (11), qui est en prise d'engagement fileté avec un écrou fileté (86), l'écrou fileté (86) faisant partie du deuxième module, le premier module (30 ; 30a) comprenant en outre un moteur électrique (101) qui est en liaison d'entraînement en rotation avec la broche filetée (95), et dont l'axe de rotation (101a) s'étend parallèlement à la broche filetée (95), et le premier module (30 ; 30a) comprenant un premier corps de base d'une seule pièce (40),
**caractérisé en ce que** la broche filetée (95) et le moteur électrique (101) sont disposés l'un à côté de l'autre dans la région du premier corps de base (40), le moteur électrique (101) s'étendant sur une première portion longitudinale (40a) du premier corps de base (40), tandis que la première surface de roulement (31a) s'étend sur une deuxième portion longitudinale (40b) du premier corps de base (40) différente de la première (40a), la broche filetée (95) s'étendant sur la première portion longitudinale (40a) et au moins en partie sur la deuxième portion longitudinale (40b) du premier corps de base (40) et les corps de roulement (15) pouvant circuler sans fin dans le premier module (30 ; 30a).

2. Dispositif de déplacement linéaire selon la revendication 1,
**caractérisé en ce que** le deuxième module (60) est réalisé sensiblement en forme de U avec une base (71) et deux branches de U (72), au moins une deuxième surface de roulement étant prévue à chaque fois sur les côtés intérieurs des branches du U (72) , les branches du U (72) venant en prise autour du premier corps de base (40), la broche filetée (95) et/ou le moteur électrique (101) s'étendant au moins en partie dans la région de la hauteur (73) des branches du U (72) et étant disposés entre celles-ci.

3. Dispositif de déplacement linéaire selon l'une quelconque des revendications précédentes, **caractérisé en ce que** le moteur électrique (101) et la broche filetée (95) sont entourés sensiblement totalement par le premier corps de base (40).

4. Dispositif de déplacement linéaire selon la revendication 3,
**caractérisé en ce que** l'écrou fileté (86) est reçu à la manière d'un piston dans un évidement d'écrou adapté (56) du premier corps de base (40), de sorte que son déplacement relatif par rapport au premier corps de base (40) puisse produire un courant d'air, le moteur électrique (101) étant reçu dans un évidement de moteur (55) du premier corps de base (40) qui est en liaison d'échange d'air avec l'évidement d'écrou (56), de sorte que ledit courant d'air puisse refroidir le moteur électrique (101).

5. Dispositif de déplacement linéaire selon la revendication 4,
**caractérisé en ce qu'**entre l'évidement d'écrou (56) et l'écrou fileté (86) ou un composant (80) connecté fixement à l'écrou fileté (86) est prévu un joint d'étanchéité à fente séparé (85), qui ferme l'espace entre l'évidement d'écrou (56) et l'écrou fileté (86) ou le composant (80) connecté fixement à celui-ci, et ce de manière sensiblement étanche à l'air.

6. Dispositif de déplacement linéaire selon l'une quelconque des revendications 4 ou 5,
**caractérisé en ce que** l'écrou fileté (86) est en liaison d'entraînement par le biais d'un tube de poussée (85), qui entoure la broche filetée (95), avec le deuxième module restant (60), l'écrou fileté (86) étant un écrou fileté pour corps de roulement qui est pourvu d'un joint d'étanchéité terminal (86a) au moins à l'extrémité opposée au tube de poussée (85).

7. Dispositif de déplacement linéaire selon la revendication 6,
**caractérisé en ce qu'**aucun joint d'étanchéité terminal n'est prévu sur le côté de l'écrou fileté (86) tourné vers le tube de poussée (85), le tube de poussée (85) étant rempli de graisse de lubrification.

8. Dispositif de déplacement linéaire selon l'une quelconque des revendications 4 à 7,
**caractérisé en ce que** l'évidement d'écrou (56) et l'évidement de moteur (55) sont prévus séparément l'un de l'autre sur une extrémité longitudinale arrière (13) du premier corps de base (40), un évidement de passage d'air (57) étant prévu entre l'évidement d'écrou (56) et l'évidement de moteur (55), de sorte que l'évidement d'écrou (56) soit en liaison d'échange d'air avec l'évidement de moteur (55).

9. Dispositif de déplacement linéaire selon l'une quelconque des revendications précédentes,
**caractérisé en ce que** le moteur électrique (101) avec la broche filetée (95) et un support sur palier rotatif associé (98) sont assemblés pour former un module d'entraînement (90) qui peut être monté en tant que tout sur le premier corps de base (40).

10. Dispositif de déplacement linéaire selon la revendication 9, lorsqu'elle se rapporte à la revendication 8,
**caractérisé en ce que** le module d'entraînement (90) recouvre sensiblement de manière étanche à l'air l'évidement d'écrou, de moteur et de passage d'air (56 ; 55 ; 57).

11. Dispositif de déplacement linéaire selon l'une quelconque des revendications précédentes,
**caractérisé en ce que** la broche filetée (95) comprend une partie de palier séparée (97) qui est montée de manière rotative par le biais d'un palier à roulement radial (98) dans le premier module (30 ; 30a), de préférence dans le module d'entraînement (90), une partie filetée séparée (96) de la partie de palier (97) étant prévue, laquelle est pourvue sur toute sa longueur d'au moins un filet (95b) de forme hélicoïdale, la partie filetée (96) étant serrée fixement dans la partie de palier (97).
